(19) **Europäisches Patentamt / European Patent Office / Office européen des brevets**

(11) **EP 4 148 636 B1**

(12) **EUROPEAN PATENT SPECIFICATION**

(45) Date of publication and mention
of the grant of the patent:
**01.04.2026 Bulletin 2026/14**

(21) Application number: **21861484.0**

(22) Date of filing: **23.08.2021**

(51) International Patent Classification (IPC):
**G06Q 10/06** (2023.01)

(52) Cooperative Patent Classification (CPC):
**G06Q 10/1093**

(86) International application number:
**PCT/JP2021/030782**

(87) International publication number:
**WO 2022/045058 (03.03.2022 Gazette 2022/09)**

(54) **SCHEDULE MANAGEMENT DEVICE, SCHEDULE MANAGEMENT SYSTEM, AND STORAGE MEDIUM**

ZEITPLANVERWALTUNGSVORRICHTUNG, ZEITPLANVERWALTUNGSSYSTEM UND SPEICHERMEDIUM

DISPOSITIF DE GESTION DE PLANIFICATION, SYSTÈME DE GESTION DE PLANIFICATION ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2020 JP 2020141850**

(43) Date of publication of application:
**15.03.2023 Bulletin 2023/11**

(73) Proprietor: **Mitsubishi Heavy Industries, Ltd.**
**Tokyo 100-8332 (JP)**

(72) Inventors:
• **SOMA Fumihito**
**Tokyo 100-8332 (JP)**

• **MORI Tomoyuki**
**Tokyo 100-8332 (JP)**

(74) Representative: **Hoffmann Eitle**
**Patent- und Rechtsanwälte PartmbB**
**Arabellastraße 30**
**81925 München (DE)**

(56) References cited:
JP-A- 2005 044 282      JP-A- 2005 223 650
JP-A- 2008 250 742      JP-A- 2015 114 912
JP-A- 2020 091 896      US-A1- 2007 005 406
US-A1- 2014 229 099      US-A1- 2014 229 099

**Description**

TECHNICAL FIELD

The present invention relates to a schedule management apparatus, a schedule management system, and a recording medium.

BACKGROUND

Technology for providing a search of means, a reservation, and a payment of various transportation as a single service is being researched.

For example, Patent Literature 1 (Japanese Patent Publication No. 2005-44282) discloses a system of transmitting an estimated arrival time to a local service company (shop, hotel, taxi company) when a delay occurred in an itinerary, and changing a reservation.

Patent Literature 2 (Japanese Patent Publication No. 2018-96810) discloses a technology for a mobile terminal to determine whether a route needs to be searched again or not, by providing a multimodal route. It is disclosed that a difference in an estimated passage time at a desired position is used to determine whether a target is moving along the route. In addition, it is disclosed that a difference between a desired position on the route and the present position at an estimated time of arrival to the desired position is used in this determination.

Patent Literature 3 (Japanese Patent No. 3952982) discloses a system that presents a facility in response to a request from a user and provides a means of transportation to the facility that the user chose.

Patent Literature 4 (WO 2015/072409 A1) discloses an apparatus that performs a route guidance to disperse movement of people and vehicles.

Patent Literature 5 (US 2014/0229099 A1) discloses a location aware appointment management application in the context of a smartphone.

Patent Literature 6 (JP 2005-044282 A) discloses a travel plan management system in the context of vacant and reserved seats managed by a transportation facility.

Cited references

[Patent Literature]

    [Patent Literature 1] Japanese Patent Publication No. 2005-44282
    [Patent Literature 2] Japanese Patent Publication No. 2018-96810
    [Patent Literature 3] Japanese Patent No. 3952982
    [Patent Literature 4] WO 2015/072409 A1
    [Patent Literature 5] US 2014/0229099 A1
    [Patent Literature 6] JP 2005-044282 A

SUMMARY

The inventor found out that an effort of a user can be reduced by supporting the user not only in determination of transportation means for moving to a destination but also in determination of day-schedule.

The present invention has been made according to the above situation, and an objective thereof is to provide a schedule management system that supports a user to decide a schedule. Other objectives will be understood from following disclosures and descriptions of embodiments.

A schedule management apparatus according to an embodiment to achieve the above objective is provided with a storage device that stores a schedule management program and a processor that reads out and executes the schedule management program. The schedule management program is provided with a first day-schedule suggestion means, a second day-schedule suggestion means and a day-schedule registration means. The first day-schedule suggestion means determines, based on a registered schedule that is registered with respect to a set participant, a suggestion day-schedule that is a day-schedule to be suggested to the participant, and generates a first day-schedule suggestion signal for suggesting the determined suggestion day-schedule to a user included in the participant. The second day-schedule suggestion means generates, based on a first day-schedule answer signal that represents an approval to the suggestion day-schedule in response to the first day-schedule suggestion signal, a second day-schedule suggestion signal for confirming the determined suggestion day-schedule with the participant except the user. The day-schedule registration means generates, based on a second day-schedule answer signal that represents an approval to the suggestion day-schedule in response to the second day-schedule suggestion signal, a day-schedule notification signal that notifies the participant of the suggestion day-schedule, and registers the suggestion day-schedule in the registered schedule of the participant, wherein the storage device is further configured to store a day-schedule database in which a list of day-schedules is registered, wherein the first day-schedule suggestion means is configured to calculate probabilities with respect to day-schedules registered in the day-schedule database; and select, by use of the calculated probabilities, the suggestion day-schedule from the day-schedules registered in the day-schedule database so that a day-schedule candidate is selected is selected with the calculated probabilities.

The schedule management program stored in a recording medium according to an embodiment to achieve the above objective makes a processor execute following processes:

determining, based on a registered schedule that is registered with respect to a set participant, a suggestion day-schedule that is a day-schedule to be suggested to the participant, and generating a first day-schedule suggestion signal for suggesting the determined suggestion day-schedule to a user included in the participant;

generating, based on a first day-schedule answer signal that represents an approval to the suggestion day-schedule in response to the first day-schedule suggestion signal, a second day-schedule suggestion signal for confirming the determined suggestion day-schedule with the participant except the user; and

generating, based on a second day-schedule answer signal that represents an approval to the suggestion day-schedule in response to the second day-schedule suggestion signal, a day-schedule notification signal that notifies the participant of the suggestion day-schedule, and registering the suggestion day-schedule in the registered schedule of the participant

calculating probabilities with respect to day-schedules registered in a day-schedule database in which a list of day-schedules is registered; and

selecting, by use of the calculated probabilities, the suggestion day-schedule from the day-schedules registered in the day-schedule database so that a day-schedule candidate is selected with the calculated probabilities.

According to the present invention, an effort to determine a schedule is reduced.

BRIEF DESCRIPTION OF THE DRAWINGS

[FIG. 1] FIG. 1 is a schematic configuration diagram of a schedule management system according to an embodiment.
[FIG. 2] FIG. 2 is a schematic configuration diagram of a schedule management apparatus according to an embodiment.
[FIG. 3] FIG. 3 is a schematic configuration diagram of a terminal according to an embodiment.
[FIG. 4] FIG. 4 is a configuration diagram of a schedule setting program according to an embodiment.
[FIG. 5] FIG. 5 is a flowchart showing processes related to a day-schedule suggestion module according to an embodiment.
[FIG. 6] FIG. 6 is a configuration diagram of a day-schedule database according to an embodiment.
[FIG. 7] FIG. 7 is a flowchart showing processes related to an action suggestion module according to an embodiment.
[FIG. 8] FIG. 8 is a configuration diagram of an action database according to an embodiment.
[FIG. 9] FIG. 9 is a diagram showing a configuration of an individual schedule database according to an embodiment.
[FIG. 10] FIG. 10 is a configuration diagram of a schedule adjustment program according to an embodiment.
[FIG. 11] FIG. 11 is a flowchart showing processes related to a schedule change request module according to an embodiment.
[FIG. 12] FIG. 12 is a flowchart showing processes related to a schedule change module according to an embodiment.
[FIG. 13] FIG. 13 is a configuration diagram of a route guidance program according to an embodiment.
[FIG. 14] FIG. 14 is a flowchart showing processes related to a route display module according to an embodiment.
[FIG. 15] FIG. 15 is a diagram for explaining a method of determining whether a user is moving along a movement means that is set according to an embodiment.
[FIG. 16] FIG. 16 is a graph showing a probability of existence of a user in a desired area when the user is moving along a movement means that is set according to an embodiment.
[FIG. 17] FIG. 17 is a flowchart showing processes related to a route change module according to an embodiment.
[FIG. 18] FIG. 18 is an example of a screen displaying a route to a user in an embodiment.
[FIG. 19] FIG. 19 is an example of a screen displaying a route to a user in an embodiment.
[FIG. 20] FIG. 20 is a flowchart showing processes related to a day-schedule suggestion module according to an embodiment.

[FIG. 21] FIG. 21 is a configuration diagram of a schedule setting program according to an embodiment.

[FIG. 22] FIG. 22 is a flowchart showing processes related to a plan setting program according to an embodiment.

[FIG. 23] FIG. 23 is a configuration diagram of an event database according to an embodiment.

[FIG. 24] FIG. 24 is a diagram showing a configuration of an individual schedule database according to an embodiment.

[FIG. 25] FIG. 25 is a flowchart showing processes related to a route display module according to an embodiment.

DETAILED DESCRIPTION

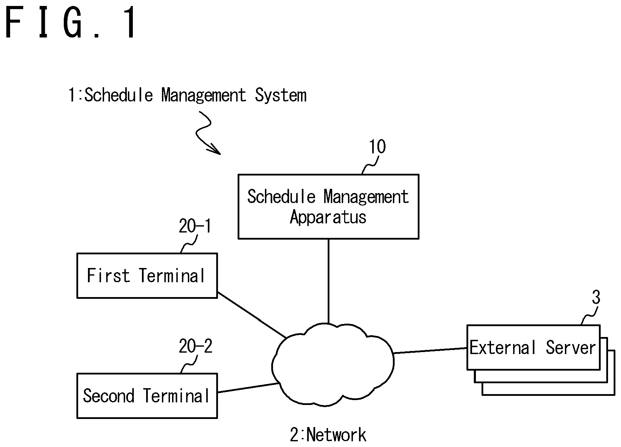

(Embodiment) As shown in FIG. 1, a schedule management system 1 according to an embodiment is provided with a schedule management apparatus 10 and terminals 20 including a first terminal 20-1 and a second terminal 20-2. The schedule management apparatus 10 and the terminals 20 are connected via a network 2 to enable mutual transmission and reception of data. The network 2 includes an arbitrary network such as internet, LAN (Local Area Network), WAN (Wide Area Network) or the like. It should be noted that a total number of the terminal 20 is not limited to two and may be arbitrarily selected.

An external server 3 is connected to the network 2. The schedule management apparatus 10 obtains various data such as operation information of transportation such as trains, road congestion information, weather information, event information, and the like, from the external server 3. The schedule management apparatus 10 suggests day-schedules, action-schedules, and the like to a user by obtaining various data from the external server 3. Herein, a day-schedule represents a destination, a date, and the like in case of a travel for example. An action-schedule represents details of the day-schedule and represents specific facilities, time, means of transportation to the facilities, and the like. For example, the day-schedule represents actions set in units of days, and the action-schedule represents actions set in units of hours. In addition, a schedule includes both day-schedules and action-schedules.

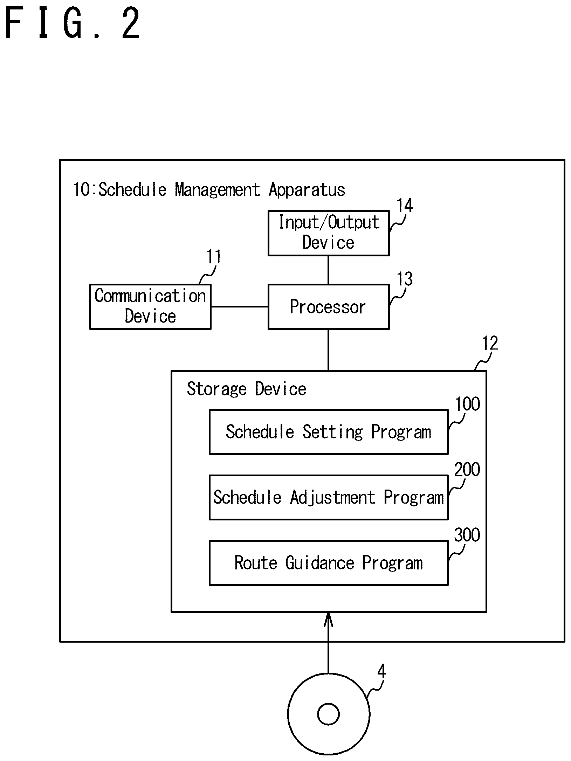

As shown in FIG. 2, the schedule management apparatus 10 is provided with a communication device 11, a storage device 12, a processor 13, and an input/output device 14. The schedule management apparatus 10 includes a computer for example.

The communication device 11 is connected to the network 2 by wire or wirelessly, and performs communication with the terminal 20 and the external server 3. The communication device 11 transfers data received from the network 2 to the processor 13. In addition, the communication device 11 transfers data received from the processor 13 to the network 2. The communication device 11 includes various interfaces such as Network Interface Card (NIC), Universal Serial Bus (USB), and the like.

Data for the processor 13 to execute processes are inputted to the input/output device 14. In addition, results of processes executed by the processor 13 are outputted to the input/output device 14. The input/output device 14 includes any input device and output device such as a keyboard, a mouse, a microphone, a display, a speaker, a touch panel, and the like.

The storage device 12 stores various data for the processor 13 to execute processes. The storage device 12 stores for example a registered schedule that is registered with respect to each user. In addition, the storage device 12 stores a schedule setting program100, a schedule adjustment program 200, and a route guidance program 300. The storage device 12 is used as a non-transitory recording medium that memorizes the schedule setting program 100, the schedule adjustment program 200, and the route guidance program 300. The storage device 12 may be provided with the schedule setting program 100, the schedule adjustment program 200, and the route guidance program 300 as a computer program product memorized in a computer-readable recording medium 4, or a computer program product that is downloadable from a server. It should be noted that an action corresponding to a day-schedule and an action corresponding to an action-schedule are registered in the registered schedule.

The processor 13 performs various data processes for managing schedules. The processor 13 reads out the schedule setting program 100, the schedule adjustment program 200, and the route guidance program 300 from the storage device 12 to execute. For example, the processor 13 includes a Central Processing Unit (CPU) or the like.

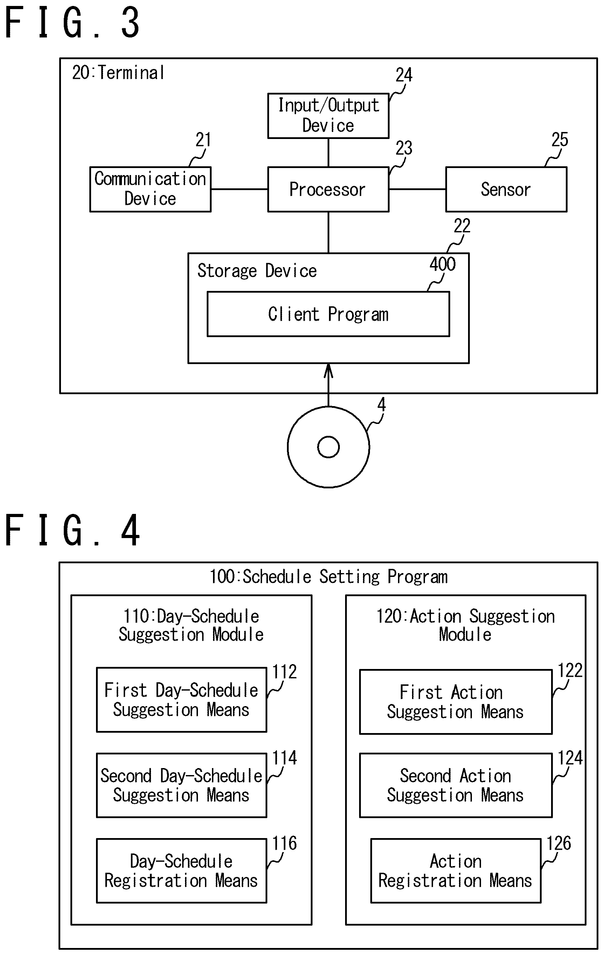

As shown in FIG. 3, the terminal 20 is provided with a communication device 21, a storage device 22, a processor 23, an input/output device 24, and a sensor 25. The terminal 20 includes for example a computer, a mobile terminal (such as a tablet terminal, a smartphone), and the like.

The communication device 21 is connected to the network 2 by wire or wirelessly, and performs communication with the schedule management apparatus 10. The communication device 21 transfers data received from the network 2 to the processor 23. In addition, the communication device 21 transfers data received from the processor 23 to the network 2. The communication device 21 includes various interfaces such as NIC, USB and the like.

Data for the processor 23 to execute processes are inputted to the input/output device 24. In addition, a result of processes executed by the processor 23 is outputted to the input/output device 24. The input/output device 24 includes any input device and output device such as a keyboard, a mouse, a microphone, a display, a speaker, a touch panel, and the like.

The sensor 25 includes a positioning sensor that measures a position of the device itself, such as Global Positioning System (GPS), a gyro sensor that detects acceleration, an optical sensor, and the like. Detection data that are detected are transmitted to the processor 23.

The storage device 22 stores various data for the processor 23 to execute processes. The storage device 22 stores for example registered schedules that are registered with respect to a user who uses the terminal 20. In addition, the storage device 22 stores a client program 400. The storage device 22 is used as a non-transitory recording medium that memorizes the client program 400. The storage device 22 may be provided with the client program 400 as a computer program product memorized in a computer-readable recording medium 4, or a computer program product that is downloadable from a server. The client program 400 may be a dedicated software or a software that can be used in common with other software, a web browser for example.

The processor 23 performs various data processes for managing schedules. The processor 23 reads out the client program 400 from the storage device 22 to execute. For example, the processor 23 includes a CPU or the like.

As shown in FIG. 4, the schedule setting program 100 is provided with a day-schedule suggestion module 110 and an action suggestion module 120. The day-schedule suggestion module 110 makes the processor 13 execute storing a day-schedule of the user in the storage device 12 of the schedule management apparatus 10, based on a plan of the user that is registered. The action suggestion module 120 makes the processor 13 execute storing an action-schedule including information representing a movement means in the storage device 12 of the schedule management apparatus 10, based on a determined day-schedule.

The day-schedule suggestion module 110 is provided with a first day-schedule suggestion means 112, a second day-schedule suggestion means 114, and a day-schedule registration means 116. The first day-schedule suggestion means 112 makes the processor 13 execute determining a day-schedule of the user and suggesting the determined day-schedule to the user. The second day-schedule suggestion means 114 makes the processor 13 execute confirming the day-schedule that the user approved to a participant who participates to the concerned schedule. The day-schedule registration means 116 makes the processor 13 execute registering the day-schedule that is confirmed with the participant in the registered schedule.

For example, when a user registers a meeting and participants of the meeting as a plan, the processor 13 that executes the first day-schedule suggestion means 112 searches from the registered schedule that is already registered a date in which no schedule is registered, and suggests a day-schedule that includes a place and a date to hold the meeting. The processor 13 that executes the second day-schedule suggestion means 114 confirms the place and the date to hold the meeting with the participants, based on an answer from the user. The processor 13 that executes the day-schedule registration means 116 registers the place and the date to hold the meeting in the registered schedule, based on answers from the participants. The participants to the meeting may be selected by the first day-schedule suggestion means 112, based on a recorded history.

The action suggestion module 120 is provided with a first action suggestion means 122, a second action suggestion means 124, and an action registration means 126. The first action suggestion means 122 makes the processor 13 execute determining an action-schedule of the user and suggesting the determined action-schedule to the user. The second action suggestion means 124 makes the processor 13 execute confirming the action-schedule that the user approved with the participants who participate to the concerned schedule. The action registration means 126 makes the processor 13 execute registering the action-schedule confirmed with the participants in the registered schedule.

For example, the processor 13 that executes the first action suggestion means 122 suggests a means of transport to the place to hold the meeting, a meeting room to hold the meeting, a time to start the meeting, and the like to the user, based on the place and the date to hold the determined meeting. The processor 13 that executes the second action suggestion means 124 confirms the means of transport, the meeting room, the time, and the like with the participants, based on the answer from the user. The processor 13 that executes the action registration means 126 registers the means of transport, the meeting room, the time, and the like, based on the answers from the participants.

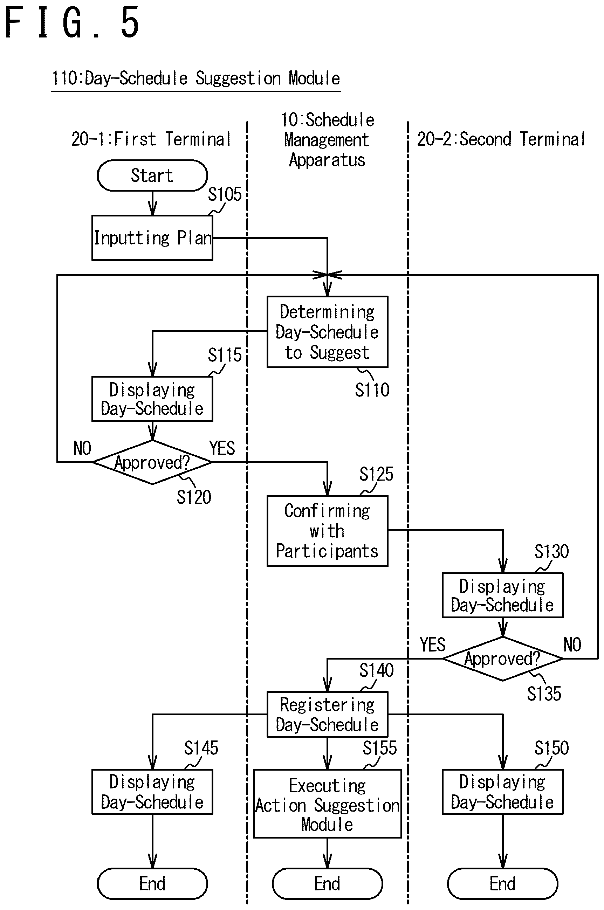

The processor 13 of the schedule management apparatus 10 and the processors 23 of the terminals 20 executes the day-schedule suggestion module 110 and the client program 400 to execute processes in the flowchart shown in FIG. 5 and determines a day-schedule. The day-schedule suggestion module 110 is executed by the processor 13 of the schedule management apparatus 10, and the client program 400 is executed by processors 23 of the terminals 20, for example the first terminal 20-1 and the second terminal 20-2.

In the step S105, the user inputs a plan, for example participants of a meeting including the concerned user, to the input/output device 24 of the first terminal 20-1. The processor 23 of the first terminal 20-1 generates a plan signal that represents the inputted plan.

In the step S110, the processor 13 of the schedule management apparatus 10 searches registered schedules that represent lists of schedules that are already registered for the participants that are set, and determines a day-schedule to suggest, for example a suggestion day-schedule that represents a place and a date to hold a meeting. The processor 13 searches the registered schedules of the participants for a date in which schedules are not registered for all the participants. Furthermore, the processor 13 searches immediately anterior schedules in the searched date for all participants and checks predicted immediately anterior location that is a location of each participant before the meeting. The processor 13 determines, based on the searched date and the predicted immediately anterior locations of the participants, a suggestion day-schedule that represents the place and the date to hold the meeting.

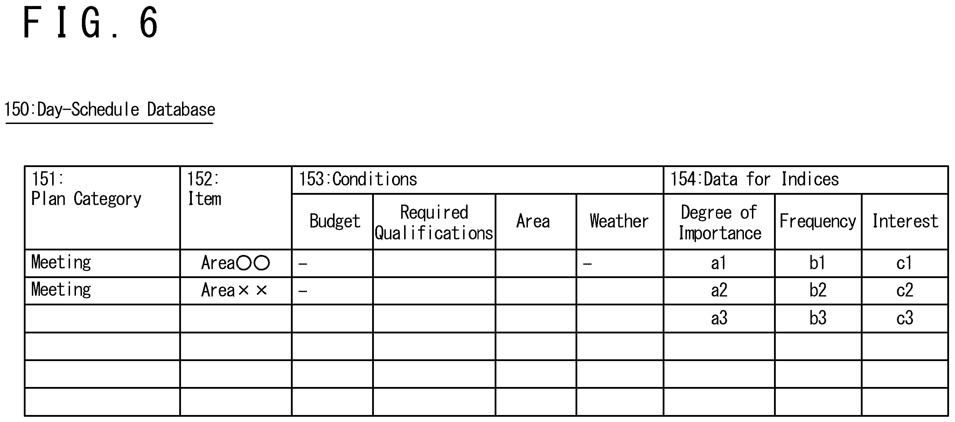

For example, the processor 13 of the schedule management apparatus 10 uses a day-schedule database 150 shown in FIG. 6 to determine a place and a date to hold a meeting. The storage device 12 of the schedule management apparatus 10 stores the day-schedule database 150 in which a list of suggestable day-schedules is registered. In the day-schedule database 150, a plan category 151, an item 152, conditions 153, and data for indices 154 are registered in association. In the plan category 151, a content for classifying a plan (for example, an action of a user) is registered. For example, when holding a meeting is set as a plan, the processor 13 extracts day-schedule data related to a meeting from the plan category 151. Furthermore, the processor 13 extracts, among the extracted day-schedule data, day-schedule data that satisfy the conditions 153 as day-schedule candidates. In the conditions 153, qualifications required to use a meeting room, an area of the meeting room, and the like are included, and the processor 13 extracts, for example, a meeting room of which a sum of distances from the predicted immediately anterior locations of the participants is small and which is available on the searched day. The processor 13 calculates, by use of the following equation, a day-schedule index $S_i$ with respect to each extracted day-schedule candidate. It should be noted that a process may be performed with the day-schedule index $S_i$ being zero for day-schedule data that do not satisfy the conditions 153. In addition, types of the conditions 153 (budget, required qualifications, and the like) may be arbitrarily selected and there is no limitation in the number of the types.

[Equation 1]

$$S_i = A \times ai + B \times bi + C \times ci \qquad (1)$$

Herein, i represents an index of the extracted day-schedule candidate. A, B, and C are coefficients that are set with respect to the users, and ai, bi and ci are data for indices 154 registered to the extracted day-schedule candidates. The data for indices 154 may be determined by recorded history and set for each user, or may be set to a same value for all users, regardless of the users. In addition, types of the data for indices 154 (degree of importance, frequency, interest, and the like) may be arbitrarily selected and there is no limitation in the number of the types. For example, when a frequency of using a same meeting room is high, bi that represents the frequency of using the concerned meeting room becomes higher than bj that represents the frequency of using another meeting room. In addition, the data for indices 154 may be changed in accordance with weekday of the day-schedule to suggest.

The processor 13 of the schedule management apparatus 10 calculates, from the calculated day-schedule index $S_i$, by use of the following equation, a probability $PS_i$ of selecting the i-th one.

[Equation 2]

$$PS_i = \frac{S_i}{\sum_k S_k} \qquad (2)$$

The processor 13 of the schedule management apparatus 10 determines a suggestion day-schedule among the extracted day-schedule candidates by use of the probability $PS_i$, so that a day-schedule candidate with an index i is selected with a probability of the calculated probability $PS_i$. A content of the suggestion day-schedule to suggest to the user, for example the place to hold the meeting, is registered in the item 152. The processor 13 generates a day-schedule suggestion signal that represents the suggestion day-schedule for suggesting the determined suggestion day-schedule to the user.

In the step S115, the processor 23 of the first terminal 20-1 presents, based on the day-schedule suggestion signal generated by the processor 13 of the schedule management apparatus 10, the suggestion day-schedule determined by the processor 13 of the schedule management apparatus 10, and suggests the suggestion day-schedule to the user. For example, the processor 23 of the first terminal 20-1 displays the suggestion day-schedule on the input/output device 24. The user checks the suggestion day-schedule and inputs an approval or a rejection to the first terminal 20-1 by using the input/output device 24.

In the step S120, the processor 23 of the first terminal 20-1 determines whether the user approved the suggestion day-schedule. When the processor 23 determines that the user rejected, the processor 23 generates a day-schedule answer signal for performing the process of the step S110 in order to change the day-schedule. When the processor 23 determines that the user approved, the processor 23 generates a day-schedule answer signal for performing the process of the step S125.

The user may register a change day-schedule, to which the suggestion day-schedule is changed, to the input/output device 24 of the first terminal 20-1. In this case, the processor 23 of the first terminal 20-1 generates a day-schedule answer signal that includes a signal that represents the change day-schedule. In the step S110, when the day-schedule answer signal includes a signal that represents a change day-schedule, the processor 13 of the schedule management apparatus 10 may determine a new suggestion day-schedule based on the change day-schedule. For example, the processor 13 searches the registered schedules of the participants and determines a suggestion day-schedule, based on the change day-schedule.

The processor 13 of the schedule management apparatus 10 determines the process to execute, based on the day-schedule answer signal. In the step S125, when the processor 13 receives the day-schedule answer signal that represents an approval of the user, the processor 13 generates a day-schedule suggestion signal that represents the suggestion day-schedule in order to confirm the approved suggestion day-schedule with the participants except the user.

In the step S130, the processor 23 of the second terminal 20-2 displays the suggestion day-schedule that the user approved, based on the day-schedule suggestion signal that the processor 13 of the schedule management apparatus 10 generated, and suggests the suggestion day-schedule to the participants except the user. The participants check the suggestion day-schedule and input an approval or a rejection to the second terminal 20-2 by using the input/output device 24.

In the step S135, the processor 23 of the second terminal 20-2 determines whether the participants approved the suggestion day-schedule. When the processor 23 determines that the participants rejected, the processor 23 generates a day-schedule answer signal for performing the process of the step S110 in order to change the day-schedule. When the processor 23 determines that the participants approved, the processor 23 generates a day-schedule answer signal for performing the process of the step S140.

The processor 13 of the schedule management apparatus 10 determines the process to execute, based on the day-schedule answer signal form the second terminal 20-2. In the step S140, when the processor 13 receives the day-schedule answer signal that represents an approval, the processor 13 registers the suggestion day-schedule that the participants approved to the registered schedule of each participant. In addition, the processor 13 generates a day-schedule notification signal that represents the registered suggestion day-schedule.

In the step S145, the processor 23 of the first terminal 20-1 displays the registered suggestion day-schedule, based on the day-schedule notification signal, in order to notify the user of the registered suggestion day-schedule.

In the step S150, the processor 23 of the second terminal 20-2 displays the registered suggestion day-schedule, based on the day-schedule notification signal, in order to notify the participants of the registered suggestion day-schedule.

In the step S155, the processor 13 of the schedule management apparatus 10 executes the action suggestion module 120 in order to determine an action-schedule.

As described above, the schedule management system 1 determines a day-schedule, based on an inputted plan. As the schedule management system 1 searches the registered schedule of the participants and suggests a day-schedule, a schedule is determined by a selection by the user of approval or rejection. Therefore, the schedule management system 1 can reduce the user's effort. It should be noted that the processor 13 of the schedule management apparatus 10 is made to execute: the step S110 by the first day-schedule suggestion means 112; the step S125 by the second day-schedule suggestion means 114; and the steps S140 and S155 by the day-schedule registration means 116.

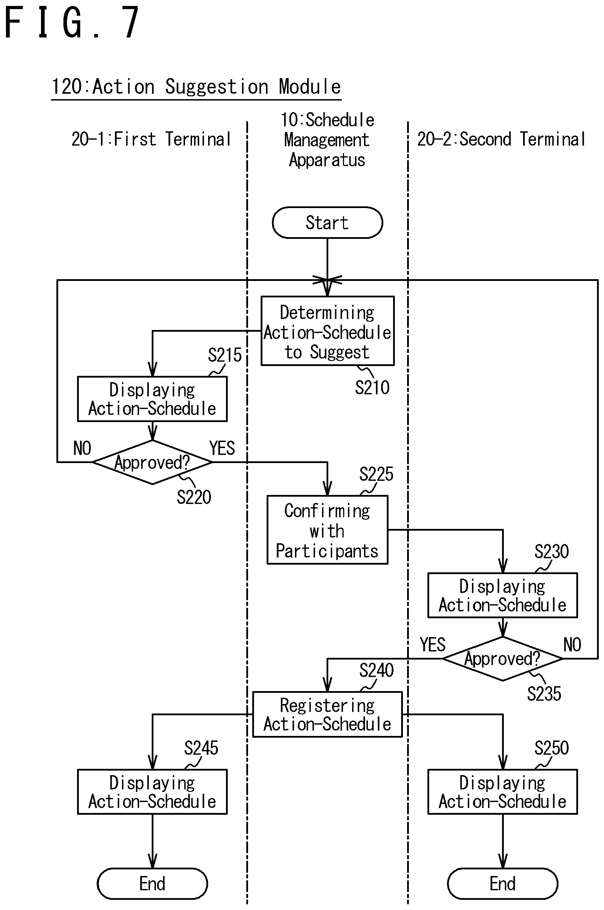

The processor 13 of the schedule management apparatus 10 and the processors 23 of the terminals 20 execute the processes in the flowchart shown in FIG. 7 and determine an action-schedule, by executing the action suggestion module 120 and the client program 400. The action suggestion module 120 is executed by the schedule management apparatus 10, and the client program 400 is executed by the terminals 20, for example the first terminal 20-1 and the second terminal 20-2.

In the step S210, the processor 13 of the schedule management apparatus 10 determines, based on the determined day-schedule (for example a place and a date to hold a meeting), a suggestion action-schedule that represents an action-schedule to suggest (for example a meeting room to hold the meeting, a time of the meeting, and a means of movement to the meeting room). The processor 13 checks the predicted immediately anterior position where each participant is before the meeting, and searches for a means of movement from the concerned predicted immediately anterior position to the place where the meeting will be held. Based on the searched means of movement, the processor 13 calculates a time of arrival of each participant to the place where the meeting will be held. The processor 13 determines the time of the meeting based on the calculated time of arrival. In addition, the processor 13 searches for meeting rooms that are set up at the place where the meeting will be held. The processor 13 determines a meeting room among the searched meeting rooms based on a frequency of use of the meeting room, a time of the meeting, and the like.

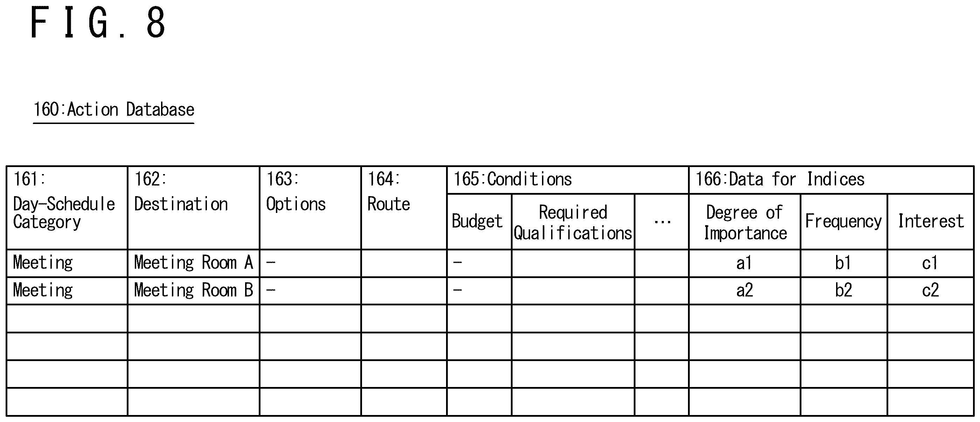

For example, the processor 13 of the schedule management apparatus 10 uses an action database 160 shown in FIG. 8 to determine a suggestion action-schedule. The storage device 12 of the schedule management apparatus 10 stores the action database 160 in which a list of suggestable action-schedules is registered. In the action database 160, a day-schedule category 161, a destination 162, options 163, a route 164, conditions 165, and data for indices 166 are registered in association. In the day-schedule category 161, a content for classifying a day-schedule is registered. For example, when holding a meeting at a place is set as a day-schedule, the processor 13 extracts action-schedule data related to a meeting at the concerned place from the day-schedule category 161. In the destination 162, a detailed position such as a meeting room is registered; and in the options 163, items that can be selected in accordance with the content of the day-schedule category 161, for example equipment to use during a meeting, are registered. Furthermore, the processor 13 extracts, among the extracted action-schedule data, action-schedule data that satisfy the conditions 165 as action-schedule candidates. In the conditions 165, qualifications required to use a meeting room, a budget, available time of the meeting room, and the like are included, and the processor 13 extracts a meeting room which is available on the day set in the day-schedule and suitable for the number of the participants. The processor 13 searches for a means of transportation for the participants to move to the extracted meeting room, and registers the searched means of transportation to the route 164. An arrival time of each participant to the meeting room is calculated based on the searched means of transportation, and the time to hold the meeting is determined. The processor 13 updates the conditions 165 corresponding to the determined meeting room, for example removes the determined time from free time, and reserves the determined meeting room at the determined time, in the action database 160. The processor 13 searches for action-schedule candidates based on the time to hold the meeting. The processor 13 calculates, by use of the following equation, an action-schedule index $O_i$ with respect to the searched action-schedule candidate. It should be noted that the process may be performed with the action-schedule index $O_i$ being zero for action-schedule data that do not satisfy the conditions 165. In addition, types of the conditions 165 (budget, required qualifications, and the like) may be arbitrarily selected and there is no limitation in the number of the types.

[Equation 3]

$$O_i = A \times ai + B \times bi + C \times ci \qquad (3)$$

Herein, i represents an index of an extracted action-schedule candidate. A, B, and C are coefficients that are set with respect to the users, and ai, bi and ci are data for indices 166 registered to the extracted action-schedule candidate. The data for indices 166 may be determined by recorded history and set for each user, or may be set to a same value for all users, regardless of the users. In addition, types of the data for indices 166 (degree of importance, frequency, interest, and the like) may be arbitrarily selected and there is no limitation in the number of the types. For example, when a frequency of using a same meeting room is high, bi that represents the frequency of using the concerned meeting room becomes higher than bj that represents the frequency of using another meeting room. In addition, the data for indices 166 may be changed in accordance with weekday and time of the action-schedule to suggest.

The processor 13 of the schedule management apparatus 10 calculates, from the calculated action-schedule index $O_i$, by use of the following equation, a probability $PO_i$ of selecting the i-th one.

[Equation 4]

$$PO_i = \frac{O_i}{\sum_k O_k} \qquad (4)$$

The processor 13 of the schedule management apparatus 10 determines a suggestion action-schedule among the extracted action-schedule candidates by use of the probability $PO_i$, so that an action-schedule candidate with an index i is selected with a rate of the calculated probability $PO_i$. The processor 13 generates an action suggestion signal that represents the suggestion action-schedule for confirming the determined suggestion action-schedule with the user.

In the step S215, the processor 23 of the first terminal 20-1 displays, based on the action suggestion signal generated by the processor 13 of the schedule management apparatus 10, the suggestion action-schedule determined by the processor 13 of the schedule management apparatus 10, and suggests the suggestion action-schedule to the user. The user checks the suggestion action-schedule and inputs an approval or a rejection to the first terminal 20-1 by using the input/output device 24.

In the step S220, the processor 23 of the first terminal 20-1 determines whether the user approved the suggestion action-schedule. When the processor 23 determines that the user rejected, the processor 23 generates an action-schedule answer signal for performing the process of the step S210 in order to change the action-schedule. When the processor 23 determines that the user approved, the processor 23 generates an action-schedule answer signal for performing the process of the step S225.

The processor 13 of the schedule management apparatus 10 determines the process to execute, based on the action-schedule answer signal from the first terminal 20-1. In the step S225, when the processor 13 receives the action answer signal that represents an approval, the processor 13 generates an action suggestion signal that represents the suggestion action-schedule in order to confirm the determined suggestion action-schedule with the participants except the user.

In the step S230, the processor 23 of the second terminal 20-2 displays the suggestion action-schedule that the user approved, based on the action suggestion signal that the processor 13 of the schedule management apparatus 10 generated, and suggests the suggestion action-schedule to the participants except the user. The participants check the suggestion action-schedule and input an approval or a rejection to the second terminal 20-2 by using the input/output device 24.

In the step S235, the processor 23 of the second terminal 20-2 determines whether the participants approved the suggestion action-schedule. When the processor 23 determines that the participants do not approve, the processor 23 generates an action answer signal for performing the process of the step S210 in order to change the action-schedule. When the processor 23 determines that the participants approved, the processor 23 generates a action answer signal for performing the process of the step S240.

The processor 13 of the schedule management apparatus 10 determines the process to execute, based on the action answer signal form the second terminal 20-2. In the step S240, when the processor 13 receives the action answer signal that represents an approval, the processor 13 registers the suggestion action-schedule that the participants approved to the registered schedule of each participant. In addition, the processor 13 generates an action notification signal that represents the registered suggestion action-schedule.

In the step S245, the processor 23 of the first terminal 20-1 displays the registered suggestion action-schedule, based on the action notification signal, in order to notify the user of the registered suggestion action-schedule.

In the step S250, the processor 23 of the second terminal 20-2 displays the registered suggestion action-schedule, based on the action notification signal, in order to notify the participants of the registered suggestion action-schedule.

As described above, the schedule management system 1 determines an action-schedule, based on the determined day-schedule. As the schedule management system 1 suggests a meeting room and a means of transportation based on the day-schedule, a schedule is registered by a selection of approval or rejection by the user. Therefore, the schedule management system 1 can reduce the user's effort. It should be noted that the processor 13 of the schedule management apparatus 10 is made to execute: the step S210 by the first action suggestion means 122; the step S225 by the second action suggestion means 124; and the step S240 by the action registration means 126.

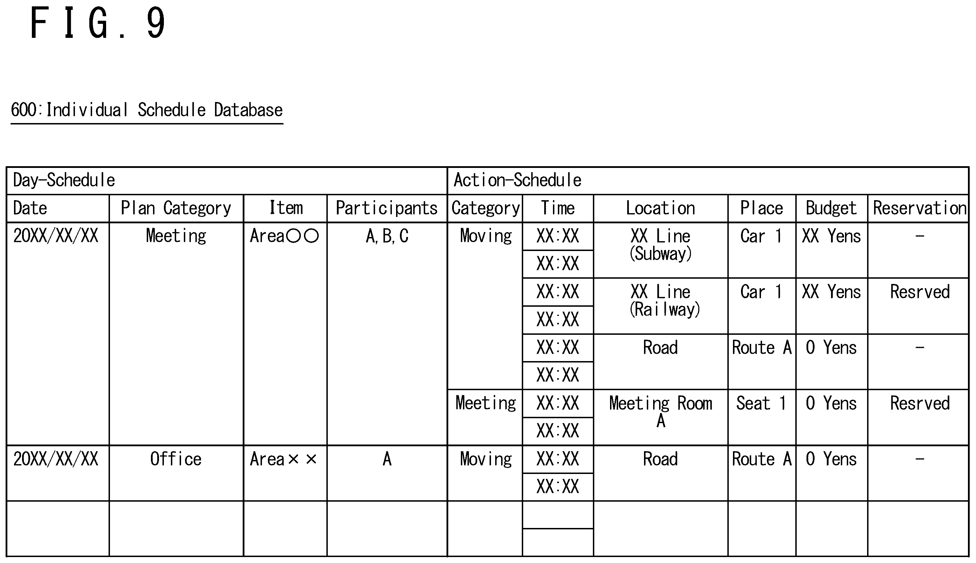

For example, as shown in FIG. 9, when the user registers a schedule of holding a meeting and then returning to the office, the processor 13 of the schedule management apparatus 10 registers a determined schedule in an individual schedule database 600 that is stored in the storage device 12 of the schedule management apparatus 10. In the individual schedule database 600, the day-schedules and the action-schedules that are determined are registered. The processor 13 registers a date, a plan category, an item, and participants as a day-schedule in the individual schedule database 600. For example, "Meeting" is registered in the plan category, and "Area OO" is registered in the item as an area to hold the meeting. In addition, the processor 13 registers a category, a time, a location, a place, a budget, and a reservation as an action-schedule in the individual schedule database 600. In the category, information representing a main action (for example, an action that is a main objective of the day-schedule) and a sub-action (for example, an action associated to the main action) is registered. For example, "Meeting" is included in the main action and a "transportation" for moving to the meeting room is included in the sub-action. In the location, information representing a place to hold the meeting and transportation facilities is registered. In the place, a seat position, a car number of a train to board, and the like are registered. In the reservation, information that represents whether the meeting room, the seat or the like is reserved is registered.

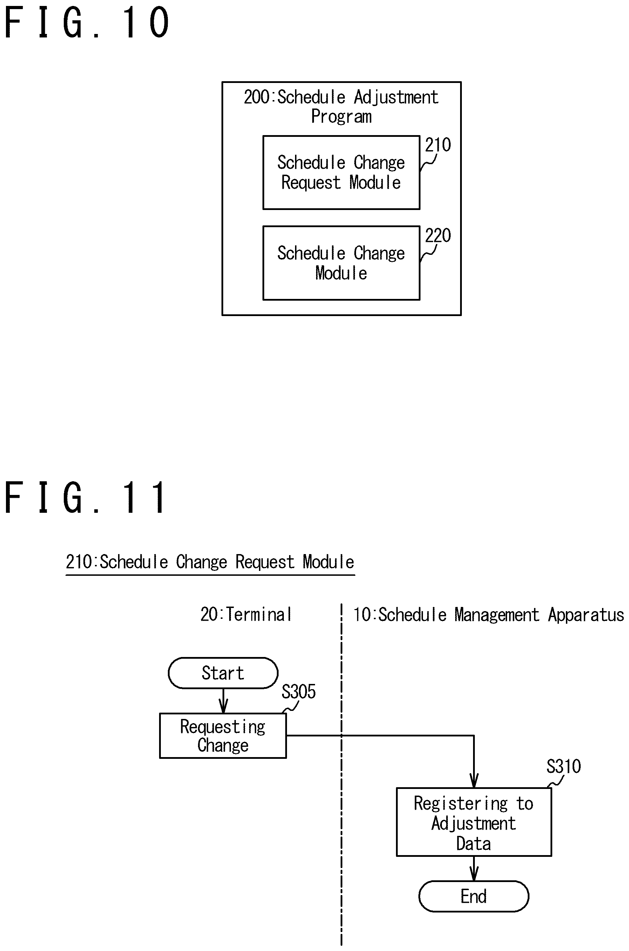

(Operation of schedule adjustment program) The schedule adjustment program 200 makes the processor 13 execute adjusting a registered schedule when a need to change the schedule occurs. As shown in FIG. 10, the schedule adjustment program 200 is provided with a schedule change request module 210 and a schedule change module 220. The schedule change request module 210 is provided with a schedule change request means and makes the processor 13 execute accepting a request from the user to change a schedule. The schedule change module 220 is provided with a schedule change means and changes a schedule by making the processor 13 execute the day-schedule suggestion module 110 or the action suggestion module 120 that are included in the schedule setting program 100, in accordance with a content of the change. The schedule change request module 210 may make the processor 13 accept a request from the participants to change the schedule.

The processor 13 of the schedule management apparatus 10 and the processors 23 of the terminals 20 execute processes in the flowchart shown in FIG. 11 and accept a change of a schedule from the user, by executing the schedule change request module 210 and the client program 400. The schedule change request module 210 is executed by the processor 13 of the schedule management apparatus 10, and the client program 400 is executed by the processors 23 of the terminals 20.

In the step S305, a change request of a schedule, for example a change request of a date, a time, a destination, participants, or the like is inputted by the user to the input/output device 24 of the terminal 20. The processor 23 of the terminal 20 generates a change signal that represents the inputted change request.

In the step S310, the processor 13 of the schedule management apparatus 10 registers the change request to an adjustment data, based on the change signal. The adjustment data includes the schedule that is the target of the change request and a content of the change.

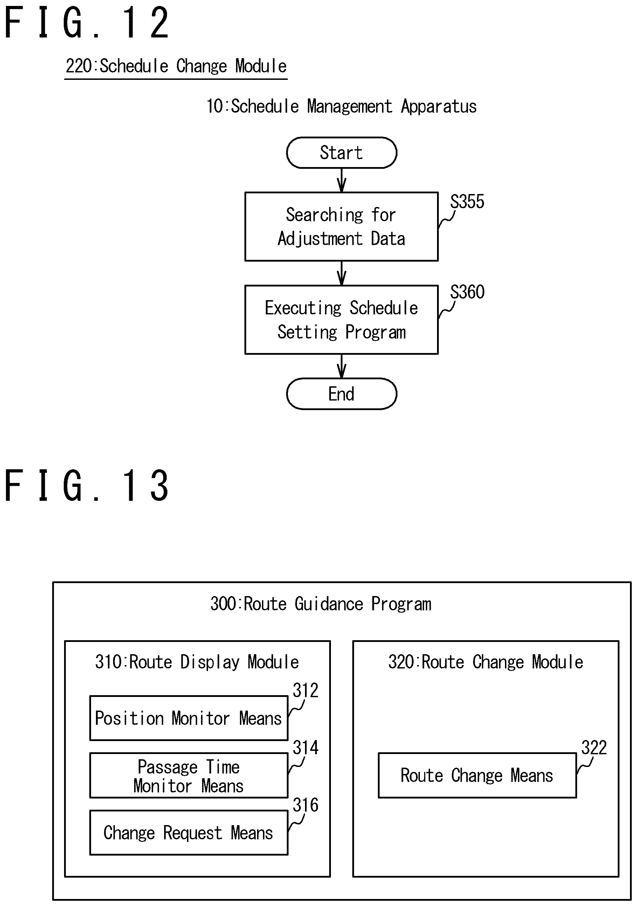

The processor 13 of the schedule management apparatus 10 executes the flowchart shown in FIG. 12 and changes the schedule, by executing the schedule change module 220.

In the step S355, the processor 13 of the schedule management apparatus 10 searches for the registered adjustment data. The schedule of which a change is requested and the content of the change are extracted from the adjustment data.

In the step S360, the processor 13 of the schedule management apparatus 10 executes the schedule setting program 100 for the schedule of which the change is requested, based on the searched adjustment data. The schedule setting program 100 is executed in accordance with the extracted content of the change. When the content of the change is a change of an action-schedule such as the meeting room or a time, the processor 13 executes the action suggestion module 120 of the schedule setting program 100 and suggests a change of the action-schedule. More specifically, a change of a time or a place of the meeting included in the action-schedule of the individual schedule database 600 shown in FIG. 9 is suggested. When the content of the change is a change of a day-schedule such as a place or a date to hold the meeting, or participants thereof, the processor 13 executes the day-schedule suggestion module 110 of the schedule setting program 100 and suggests a change of the day-schedule and the action-schedule. More specifically, a change of a date, an item, or participants in the individual schedule database 600 is suggested.

As described above, the schedule adjustment program 200 makes the processor 13 of the schedule management apparatus 10 execute changing a day-schedule or an action-schedule based on the change signal that the processor 23 of the terminal 20 generated.

The processor 13 of the schedule management apparatus 10 may receive information related to the registered day-schedule from an external server 3 and register the change request to the adjustment data, by executing the schedule change request module 210. For example, the schedule change request module 210 makes the processor 13 execute receiving information related to a cancel of an event registered as a day-schedule from the external server 3, and registering a change request that represents the cancel of the event to the adjustment data. The schedule change module 220 makes the processor 13 execute the day-schedule suggestion module 110 based on the registered change request and suggests a removal of the day-schedule and the action-schedule. The schedule change request module 210 may receive information of a change of weather forecast or the like from the external server 3 and make the processor 13 execute registering the change request to the adjustment data.

(Operation of route guidance program) As shown in FIG. 13, the route guidance program 300 is provided with a route display module 310 and a route change module 320, and makes the processor 13 of the schedule management apparatus 10 execute a support for the user to act on the schedule. For example, the route display module 310 makes the processor 13 execute guiding the user based on the route registered to the registered schedule and determining whether the user is moving along the route. The route change module 320 is provided with a route change means 322, corrects the route when a traffic jam, a train delay, or the like occurs, and changes the schedule if necessary. The route guidance program 300 may make the processor 13 execute a support for the participants to act on the schedule.

The route display module 310 is provided with a position monitor means 312, a passage time monitor means 314, and a change request means 316. The position monitor means 312 makes the processor 13 of the schedule management apparatus 10 execute monitoring a position of the user and determining whether the user is moving along a route by the registered movement means. The passage time monitor means 314 makes the processor 13 execute obtaining a route status such as a traffic jam or a train delay on the route and determining whether moving along the route by the registered movement means is possible. The change request means 316 makes the processor 13 execute the route change module 320 when it becomes necessary to change the movement means.

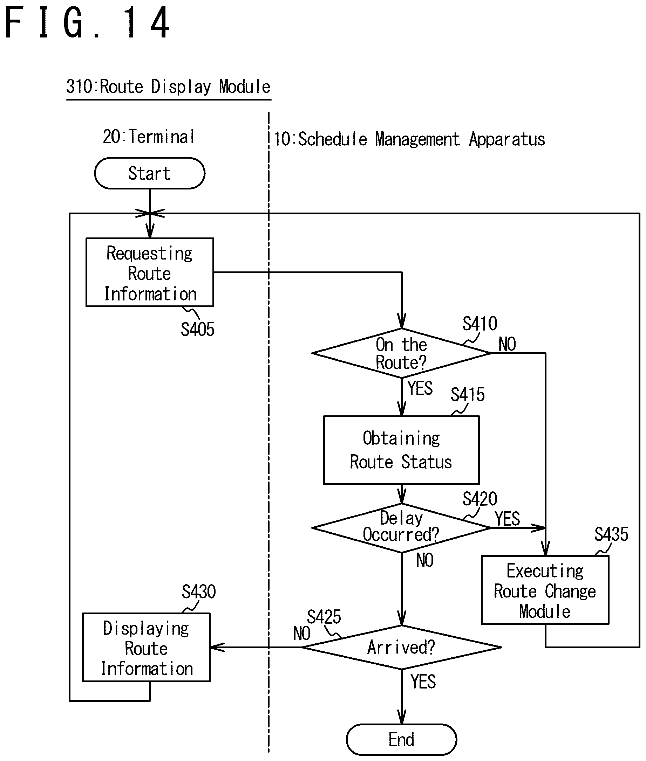

The processor 13 of the schedule management apparatus 10 and the processor 23 of the terminal 20 execute the processes in the flowchart shown in FIG. 14 and guide the route to the user by executing the route display module 310 and the client program 400. The route display module 310 is executed by the schedule management apparatus 10 and the client program 400 is executed by the terminal 20.

In the step S405, the processor 23 of the terminal 20 searches the registered schedule stored in the storage device 22 and generates, at a time of starting the registered action, a route request signal that requests a route information. In the route information, a time to change trains, a route on a map, and the like are included. In addition, the processor 23 obtains a self-position by the sensor 25 and includes a signal that represents the self-position in the route request signal.

In the step S410, the processor 13 of the schedule management apparatus 10 determines whether the user is moving along the registered route, based on the position obtained from the terminal 20. When the processor 13 determines that the user is moving along the route, the processor 13 executes the process in the step S415. When the processor 13 determines that the user is not moving along the route, the processor 13 executes the process in the step S435 and executes the route change module 320. In addition, the processor 13 may obtain the position of the user from the external server 3. For example, the processor 13 may obtain the position of the user based on an image taken by an optical sensor such as a surveillance camera. In this case, the processor 13 obtains images that the optical sensor took and searches the obtained images for an image in which the user is taken. Furthermore, the processor 13 obtains a position where the image, in which the user is taken, is taken as the position of the user. The processor 13 may obtain transit information of the user from a gate such as an automatic ticket gate in a train station and obtain the position of the user based on the obtained transit information.

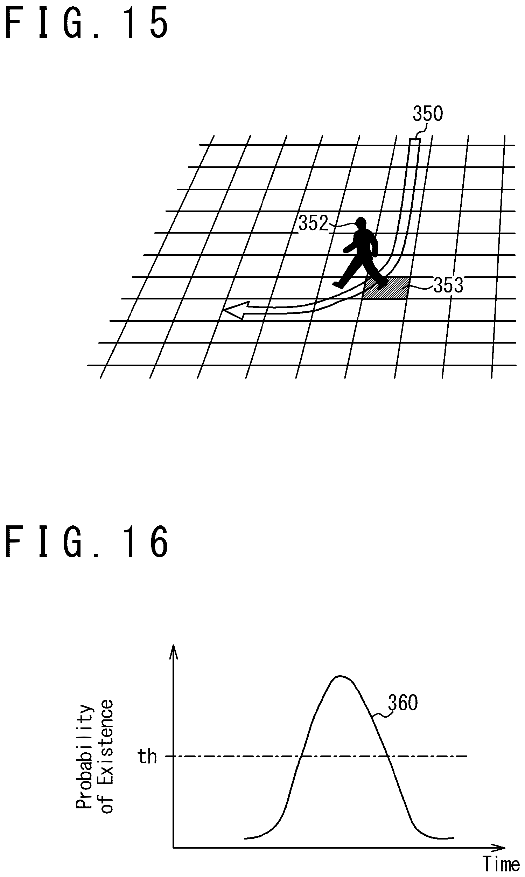

For example, as shown in FIG. 15, the processor 13 of the schedule management apparatus 10 calculates a route data that represents a probability of existence of the user 352 in an area 353 where the user 352 exists, from the movement means. In the route data, data that represent a position where the user 352 exists when the user 352 moves along the route by the movement means is included. More specifically, a probability of existence of the user 352 at a desired time is described on the route data, for each of areas where positions on a map are divided into a mesh. For example, when moving along a movement route 350 as a movement means is registered, a probability of existence of the user 352 along the movement route 350 is set. Thus, the processor 13 extracts the probability of existence at the area 353 where the terminal 20 exists.

The processor 13 of the schedule management apparatus 10 determines whether the probability at the current time is equal to or greater than a desired threshold value, in the calculated probability of existence. As shown in FIG. 16, the probability of existence 360 at an area 353 included in the route data varies in accordance with time. The schedule management apparatus 10 calculates the probability of existence 360 at the current time in an area 353 where the terminal 20 exists, and compares the calculated the probability of existence 360 with a threshold value th. The threshold value th is an arbitrarily predetermined value. When the probability at the current time is equal to or greater than the desired threshold value th, the processor 13 determines that the user 352 is moving along the route. In addition, a range of time in which the probability of existence of the user 352 in the area 353 is equal to or greater than the threshold value may be registered to the route data. In this case, the schedule management apparatus 10 extracts a range of time registered to the area 353 where the user 352 exists, and determines that the user 352 is moving along the route when the current time is included in the extracted range of time. It should be noted that the processor 13 may calculate the route data when the movement means is determined.

In the step S415, when the user 352 is moving along the route, the processor 13 of the schedule management apparatus 10 obtains the route status on the route of the movement means. The route status represents for example delay information of a train, a traffic jam information of a road, and the like on the route, and is obtained from the external server 3.

In the step S420, the processor 13 of the schedule management apparatus 10 determines whether a change of the movement means is necessary, based on the obtained route status. For example, a delay time corresponding to the movement means (for example, a delay time of a train, an estimated time to pass through a traffic jam, or the like) is included in the obtained route status. The processor 13 extracts the delay time from the obtained route status and determines whether a change of the movement means is necessary. For example, the processor 13 determines that a change of the movement means is necessary when an arrival time of a train becomes later than a departure time of a train to transfer due to a delay. When the processor 13 determines that a change of the movement means is necessary, the processor 13 executes the route change module 320 at the step S435 in order to change the movement means.

When the processor 13 of the schedule management apparatus 10 determines that any change of the movement means is not necessary, the processor 13 determines whether the user 352 is arrived to the destination, in the step S425. When the user 352 is arrived to the destination, the processor 13 ends the route display module 310. When the user 352 is not arrived to the destination, the processor 13 generates a route signal that represents the route information in order to guide the user 352 along the registered route.

In the step S430, for example, the processor 23 of the terminal 20 displays the route information based on the route signal. The user moves based on the displayed route information. When a desired time has elapsed, the processor 23 executes the process of the step S405.

As described above, the processor 13 of the schedule management apparatus 10 guides the user based on the route that is registered to the registered schedule by executing the route display module 310, and can determine whether the user is moving along the route. It should be noted that the processor 13 is made to execute: the steps S410 and S425 by the position monitor means 312; the steps S415 and S420 by the passage time monitor means 314; and the step S435 by the change request means 316.

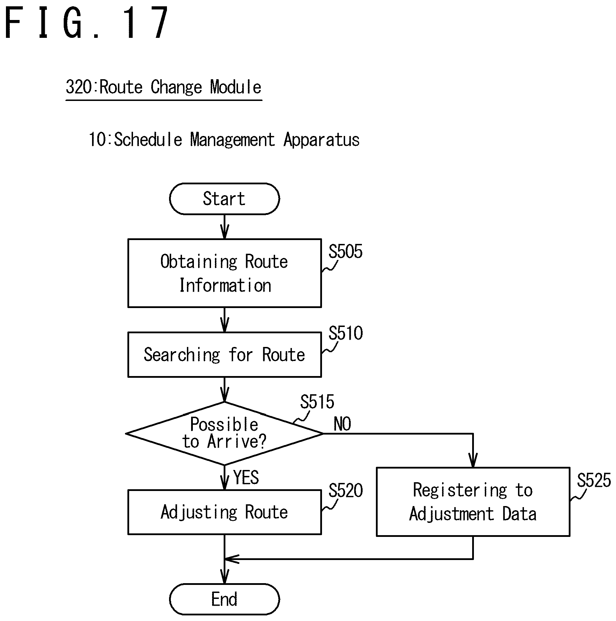

The processor 13 of the schedule management apparatus 10 executes the flowchart shown in FIG. 17 and changes the movement means or the day-schedule by executing the route change module 320. The route change module 320 is executed by the schedule management apparatus 10.

In the step S505, the processor 13 of the schedule management apparatus 10 obtains a route status on the route along which the user 352 moves. The route status represents for example delay information of a train, traffic jam information of a road, or the like on the route, and is obtained from the external server 3. The processor 13 may use the route status of the route display module 310 obtained in the step S415.

In the step S510, the processor 13 of the schedule management apparatus 10 searches for a movement means for moving from the current position to the destination. The processor 13 obtains the current position from the terminal 20. The processor 13 may use the current position of the terminal 20 of the route display module 310 obtained in the step S410. By using the current position of the terminal 20 and the route status that are obtained, the movement means is searched. For example, the processor 13 extracts a delay time from the route status, adds the extracted delay time to a passage time of the corresponding movement means, and searches for a new movement means. More specifically, when a train on the route is delayed of ten minutes, the processor 13 searches for a route when the concerned train arrives ten minutes late.

In the step S515, the processor 13 of the schedule management apparatus 10 determines whether the user can arrive at the destination by the time registered to the registered schedule. When the user can arrive at the destination, the processor 13 executes the process in the step S520. When the user cannot arrive at the destination, the processor 13 executes the process in the step S525.

When the user can arrive at the destination, in the step S520, the processor 13 of the schedule management apparatus 10 changes the movement means that is registered to the user to the newly searched movement means and ends the process of the route change module 320. When the process of the route change module 320 ends, it returns to the process of the route display module 310 and the guidance to the user carries on.

When the user cannot arrive at the destination, in the step S525, the processor 13 of the schedule management apparatus 10 registers a change request of the schedule to the adjustment data. In the adjustment data, a content representing a change of the schedule including the concerned movement means and the day-schedule or an action-schedule is included.

The processor 13 of the schedule management apparatus 10 determines whether to change the day-schedule or change the action-schedule based on the registered schedule of the participants. The processor 13 searches the registered schedule of the participants and obtains a time from immediately after the concerned schedule to a start of the next schedule. When the obtained time is longer than a time from the estimated arrival time that is registered to the registered schedule to the time of arrival at the destination with the delay, the processor 13 determines to change the action-schedule. When the obtained time is equal to or shorter than a time from the estimated arrival time that is registered to the registered schedule to the time of arrival at the destination with the delay, the processor 13 determines to change the day-schedule.

As described above, even if a delay occurs during execution of the route guidance program 300, the processor 13 of the schedule management apparatus 10 can automatically change the movement means and notify the user along the changed movement means. In addition, when it is necessary to change a date and a time of a meeting or the like, the processor 13 can automatically determine and prompt the user the change. For this reason, since the schedule management system 1 can guide the user along a movement means accommodated to the delay or the like, the schedule management system 1 can support a smooth execution of the schedule by the user.

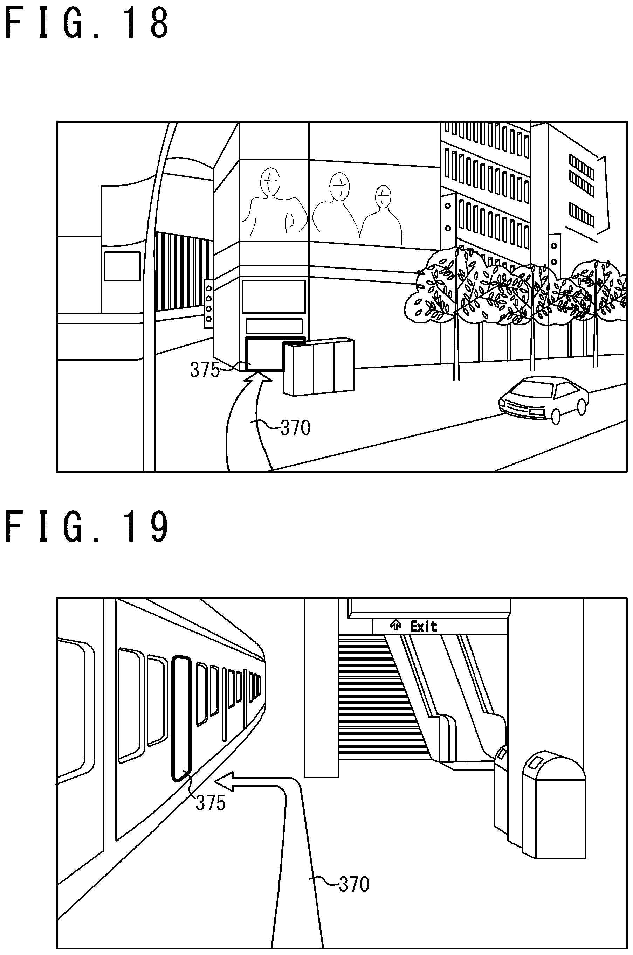

In addition, as shown in FIG. 18, the processor 23 of the terminal 20 may display the route 370 and an entrance 375 in sight on the input/output device 24 of the terminal 20, by using Augmented Reality (AR) technology, based on route information that the processor 13 of the schedule management apparatus 10 outputs by the route guidance program 300. In addition, as shown in FIG. 19, the processor 23 of the terminal 20 may display the route 370 and an entrance 375 to board on the input/output device 24 of the terminal 20, based on route information that the processor 13 of the schedule management apparatus 10 outputs by the route guidance program 300.

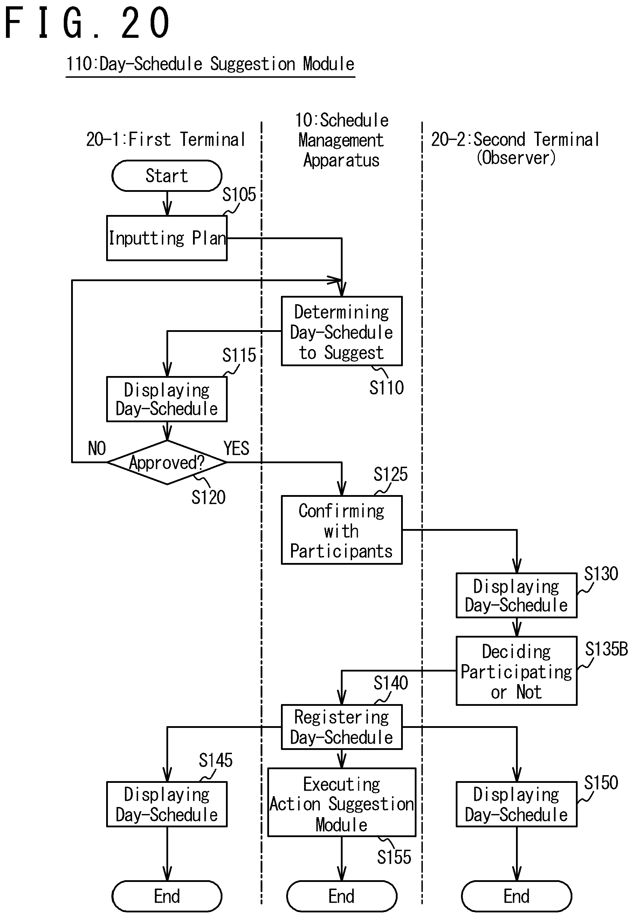

(Types of participants) A participant may be set as a person of voluntary participation (observer). In this case, the day-schedule suggestion module 110 included in the schedule setting program 100 makes the processor 13 of the schedule management apparatus 10 execute the process in the flowchart shown in FIG. 20. In the flowchart shown in FIG. 20, the step S135 in the flowchart shown in FIG. 5 is replaced to the step S135B. As other steps are similar to the ones in the flowchart shown in FIG. 5, description thereof will be omitted.

In the step S135B, the processor 23 of the second terminal 20-2 generates a day-schedule answer signal that represents participating or not. When participating to the concerned schedule is inputted, the processor 23 generates a day-schedule answer signal that represents adding the concerned user to participants. When not participating to the concerned schedule is inputted, the processor 23 generates a day-schedule answer signal that represents removing the concerned user from the participants. As a result, the processor 13 of the schedule management apparatus 10 can set whether or not adding the concerned user to participants.

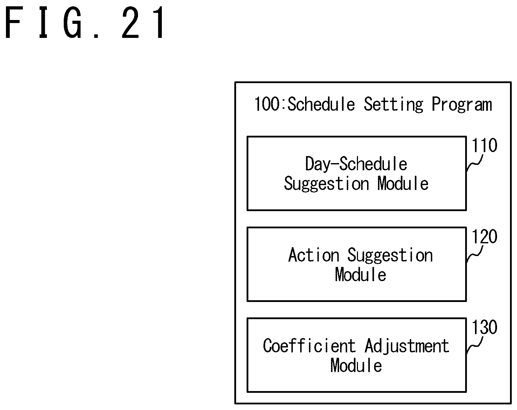

(Updating coefficients for calculating day-schedule index and action-schedule index) The processor 13 of the schedule management apparatus 10 may execute the schedule setting program 100 and update the coefficients A, B, and C for calculating day-schedule index $S_i$ and action-schedule index $O_i$ in accordance with the user's request. In this case, as shown in FIG. 21, the schedule setting program 100 is provided with a coefficient adjustment module 130 for updating the coefficients A, B, and C.

The coefficient adjustment module 130 is configured so that the processor 13 of the schedule management apparatus 10 can obtain a rating by the user with respect to the day-schedule or the action-schedule that is suggested in the schedule setting program 100. For example, in the step S120 in the flowchart shown in FIG. 5, a rating of the suggested day-schedule is inputted to the input/output device 24 of the first terminal 20-1. The processor 23 of the first terminal 20-1 generates the day-schedule answer signal based on the inputted rating. The processor 13 of the schedule management apparatus 10 changes the coefficients A, B, and C for calculating the day-schedule index $S_i$, based on the day-schedule answer signal. In addition, in the step S220 in the flowchart shown in FIG. 7, a rating of the suggested action-schedule is inputted to the input/output device 24 of the first terminal 20-1. The processor 23 of the first terminal 20-1 generates the action-schedule answer signal based on the inputted rating. The processor 13 of the schedule management apparatus 10 changes the coefficients A, B, and C for calculating the day-schedule index $S_i$, based on the action-schedule answer signal.

In addition, the user may input the rating with respect to the suggested day-schedule at an arbitrary timing. The processor 23 of the terminal 20 generates a rating signal that represents the inputted rating. The processor 13 of the schedule management apparatus 10 changes the coefficients A, B, and C for calculating the day-schedule index $S_i$ or the action-schedule index $O_i$ based on the rating signal that the terminal 20 generated.

The coefficients A, B, and C may be calculated by using ratings by all users. The processor 13 of the schedule management apparatus 10 can obtain ratings by all users. For this reason, the processor 13 may calculate the coefficients A, B, and C by using both the ratings by all users and a rating by an individual user. For example, the processor 13 stores a coefficient $A_1$ calculated from the ratings by all users and a coefficient $A_2$ calculated from the rating by an individual user. The coefficient A is calculated based on the coefficient $A_1$ and the coefficient $A_2$. For example, the coefficient A may be calculated by adding the coefficient $A_2$ to the coefficient $A_1$. In addition, the coefficient A may be calculated by multiplying the coefficient $A_2$ to the coefficient $A_1$.

The coefficient adjustment module 130 may be configured so that the processor 13 of the schedule management apparatus 10 calculates the coefficients A, B, and C based on past action history of the user. The processor 13 of the schedule management apparatus 10 may calculate the coefficients A, B, and C by estimating a tendency of the user based on past action history of the user.

The coefficient adjustment module 130 may be configured so that the processor 13 of the schedule management apparatus 10 accepts an input of an opinion by the user and calculates the coefficients A, B, and C based on the inputted information. For example, the processor 13 may execute the coefficient adjustment module 130 and obtain information that the user writes to a Social Networking Service (SNS) or the like. The coefficients A, B, and C may be calculated based on information that the user wrote.

In addition, the coefficient adjustment module 130 may be configured so that the processor 13 of the schedule management apparatus 10 includes an artificial intelligence or the like and outputs a text in accordance with a text that the user inputted. For example, the processor 13 executes the coefficient adjustment module 130 and calculates the coefficients A, B, and C based on a text that the user inputted. In this case, the storage device 12 of the schedule management apparatus 10 stores a coefficient correction value table in which words and coefficient correction values are associated, and the processor 13 calculates the coefficients A, B, and C based on the coefficient correction value table.

In addition, the coefficients A, B, and C may be calculated to decrease as time passes since a rating or a text has been inputted. For example, the coefficients A, B, and C may be calculated to become zero after a predetermined amount of time has elapses. This predetermined amount of time may be set in accordance with the plan category.

The coefficient adjustment module 130 of the schedule setting program 100 may make the processor 13 of the schedule management apparatus 10 calculate ai, bi, and ci of the data for indices 154 and 166 for calculating the day-schedule index $S_i$ and the action-schedule index $O_i$ based on the conditions 153 that are registered to the day-schedule database 150. For example, in the conditions 153 of the day-schedule database 150, a capacity of people is included, and a registered number of people who have registered the concerned schedule is registered. When the concerned day-schedule is determined, the processor 13 that executes the day-schedule suggestion module 110 of the schedule setting program 100 adds the number of the participants to the registered number of people that is included in the day-schedule database 150. The processor 13 calculates ai, bi, and ci of the data for indices 154 and 166 in accordance with a ratio of the capacity of people and the registered number of people. For example, the closer the registered number of people is to the capacity people, the smaller the processor 13 makes ai, bi, and ci of the data for indices 154 and 166. As a result, the schedule setting program 100 can avoid the day-schedule from being registered with exceed capacity.

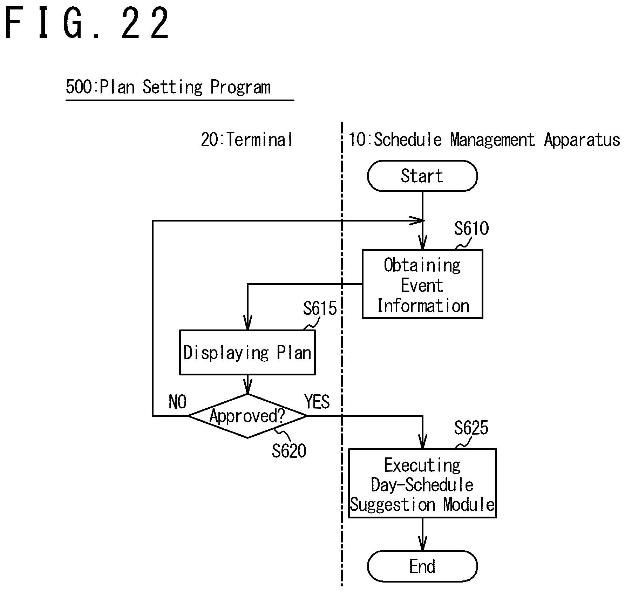

(Plan suggestion) The schedule management system 1 may suggest a plan to the user. In this case, the storage device 12 of the schedule management apparatus 10 stores the plan setting program 500. The processor 13 of the schedule management apparatus 10 and the processor 23 of the terminal 20 execute the plan setting program 500 and the client program 400, execute the flowchart shown in FIG. 22 and suggest a plan. The plan setting program 500 is executed by the schedule management apparatus 10 and the client program 400 is executed by the terminal 20. Herein, the plan represents an outline of a day-schedule, and represents an action that is set in units of days for example.

In the step S610, the processor 13 of the schedule management apparatus 10 obtains event information from the external server 3. The processor 13 determines a plan based on the event information. For example, in the event information a deadline of work is included. The processor 13 determines a timing to hold a meeting and participants thereof, based on the deadline of work and recorded history. The processor 13 generates a plan signal that represents the timing to hold the meeting and the participants thereof that are determined.

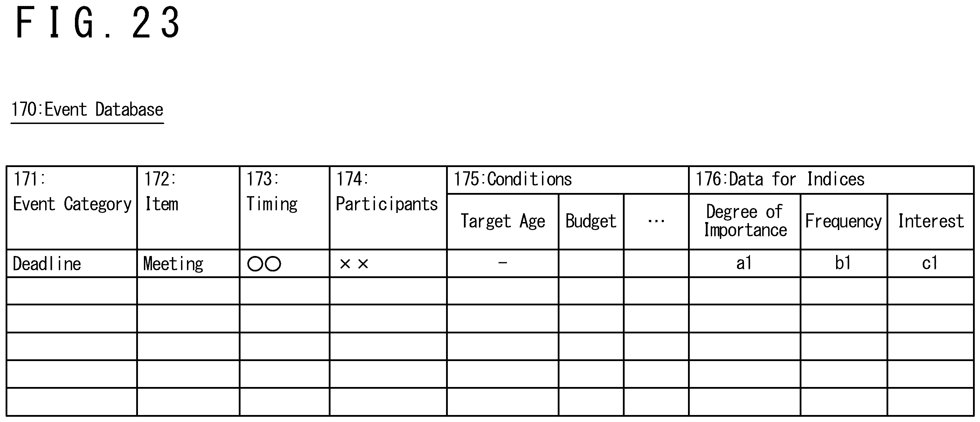

For example, as shown in FIG. 23, the processor 13 of the schedule management apparatus 10 uses the event database 170 and determines the plan. In the storage device 12 of the schedule management apparatus 10, the event database 170 to which a list of plans to suggest is registered is stored. In the event database 170, an event category 171, an item 172, a timing 173, participants 174, conditions 175, and data for indices 176 are registered in association. In the event category 171, a content corresponding to the event information is registered. For example, when an event that represents a deadline of work is set, plan data related to a content of the work is extracted. Furthermore, plan data that satisfy the conditions 175 is extracted from the extracted plan data, as a plan candidate. The processor 13 calculates a plan index $P_i$ by using the following equation with respect to the extracted plan candidate. It should be noted that the process may be executed with a plan index $P_i$ being zero for a plan data that do not satisfy the condition 175.

[Equation 5]

$$P_i = A \times ai + B \times bi + C \times ci \qquad (5)$$

Herein, i represents an index of an extracted plan candidate. A, B, and C are coefficients that are set with respect to the users, and ai, bi and ci are data for indices 176 registered to the extracted plan candidate. The data for indices 176 may be determined by recorded history and set for each user. In addition, types of the data for indices 176 (degree of importance, frequency, interest, and the like) may be arbitrarily selected and there is no limitation in the number of the types. For example, when a frequency of holding a meeting at a predetermined timing based on a deadline is high, bi that represents the frequency of the concerned meeting becomes higher than bj that represents a frequency of another meeting. In addition, the data for indices 176 may be changed in accordance with the timing of the plan to suggest. The coefficients A, B, and C and ai, bi, and ci of the data for indices 176 may be updated by the coefficient adjustment module 130, similarly to the coefficients A, B, and C and the data for indices 154 and 166 for calculating the day-schedule index $S_i$ and the action-schedule index $O_i$.

The processor 13 of the schedule management apparatus 10 calculates a probability $PP_i$ of selecting an i-th one from the calculated plan index $P_i$, by using the following equation.

[Equation 6]

$$PP_i = \frac{P_i}{\sum_k P_k} \qquad (6)$$

The processor 13 of the schedule management apparatus 10 determines a suggestion plan among the extracted plan candidates by using the probability $PP_i$, so that the plan candidate with an index i is selected with a rate of the calculated probability $PP_i$. The processor 13 generates a plan signal that represents the suggestion plan for confirming the determined suggestion plan with the user.

In the step S615, the processor 23 of the terminal 20 displays, based on the plan signal that the processor 13 of the schedule management apparatus 10 generated, the suggestion plan that the processor 13 of the schedule management apparatus 10 determined, and suggests the suggestion plan to the user. The user checks the suggestion plan and inputs an approval or a rejection to the terminal 20 by using the input/output device 24.

In the step S620, the processor 23 of the terminal 20 determines whether the user approved the suggestion plan. When the processor 23 determines that the user does not approve, the processor 23 generates an answer signal for performing the process of the step S610 in order to change the plan. When the processor 23 determines that the user approved, the processor 23 generates an answer signal for performing the process of the step S625.

The processor 13 of the schedule management apparatus 10 determines the process to execute, based on the answer signal. When the answer signal represents an approval, the processor 13 executes the day-schedule suggestion module 110 in the step S625.

As described above, the schedule management system 1 determines a plan based on obtained event information. In addition, when the plan setting program 500 is executed and the determined plan overlaps with a day-schedule that is already registered, the processor 13 of the schedule management apparatus 10 may input a request to change a day-schedule that overlaps with the plan, to the schedule change module 220 of the schedule adjustment program 200.

(Application to private use) The schedule management system 1 may be applied to a private event such as a travel. For example, when the user registers an overnight sea bathing as a plan, the processor 13 of the schedule management apparatus 10 executes the day-schedule suggestion module 110 that is included in the schedule setting program 100, searches the registered schedule that is already registered for a date in which no schedule is registered, and suggest a day-schedule that includes a destination and a date of sea bathing. In this case, in the day-schedule database 150, a list of seawater baths is registered. In addition, locations of seawater baths are registered to the day-schedule database 150, and the processor 13 of the schedule management apparatus 10 extracts, from the seawater baths that are registered to the day-schedule database 150, seawater baths where the user can travel within one night from the current position. From the extracted seawater baths, seawater baths that satisfy the conditions 153 registered to the day-schedule database 150 are extracted as day-schedule candidates. The processor 13 calculates day-schedule indices $S_i$ with respect to the extracted day-schedule candidates, and determines a seawater bath to suggest. In the conditions 153, for example, weather or the like may be included. The processor 13 may obtain weather information from the external server 3 and determine the day-schedule by using the obtained weather information.

The action suggestion module 120 that is included in the schedule setting program 100 makes for example the processor 13 of the schedule management apparatus 10 suggest a movement means to the destination of the travel, an accommodation, an accommodation plan (including accommodation fees, with or without meals, for example), and the like to the user, in accordance with the determined day-schedule. For example, the processor 13, that has executed the action suggestion module 120, in accordance with the day-schedule including the destination and the date of sea bathing, based on conditions such as an estimated budget, suggests an action-schedule with a movement means to the destination, a hotel to stay, having meals or not, and the like. For example, in an option of the action database 160, an accommodation plan is registered. When the user approves, the processor 13 may transmit a reservation signal, that represents making a reservation, to the external server 3 that manages reservations of facilities to use such as hotels, and make a reservation of the facility to use. In the signal that represents making a reservation, a signal that represents paying fees that correspond to contents that the user approved may be included.

In addition, the processor 13 of the schedule management apparatus 10 may execute the plan setting program 500 and suggest for example a plan based on event information of a concert or the like.

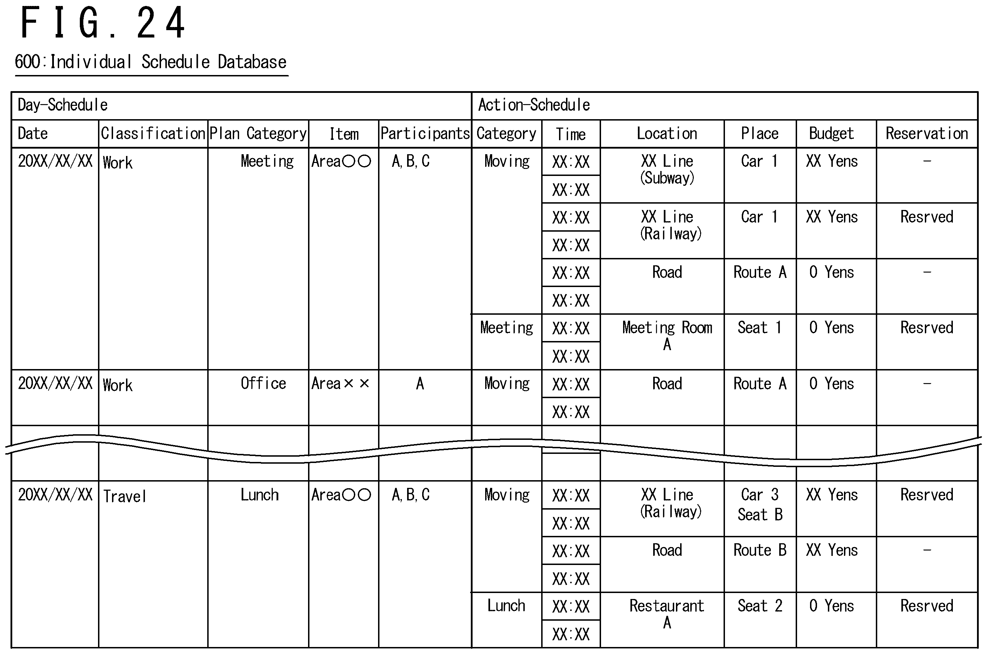

As shown in FIG. 24, the schedule management system 1 may register schedules of each user to the individual schedule database 600, separately for private and work. For example, in the individual schedule database 600, a classification for classifying work, travel and the like to private or work is registered. The schedule management system 1 makes it easier for the user to understand the schedule by checking the classification that is displayed on the terminal 20.

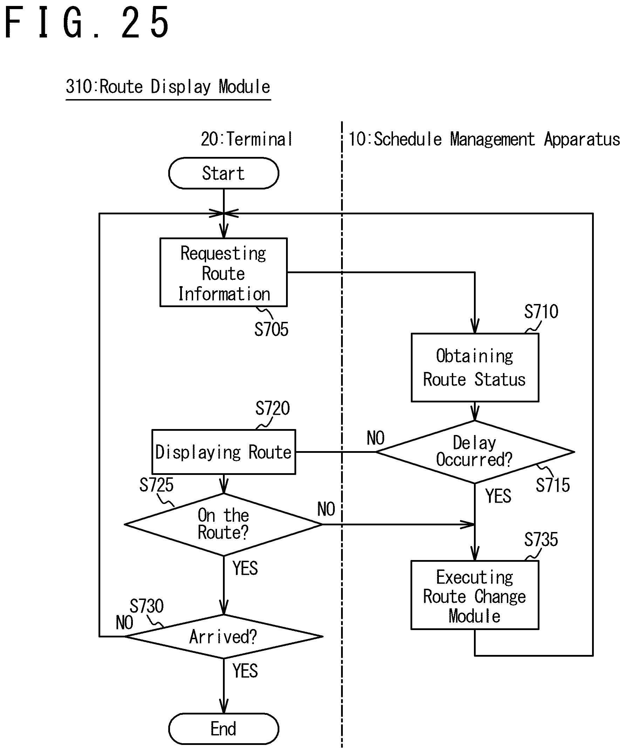

(Variation of route display module) In the route display module 310, the position monitor means 312 may be executed by the processor 23 of the terminal 20. For example, the processor 13 of the schedule management apparatus 10 and the processor 23 of the terminal 20 execute the route display module 310 and the client program 400 and execute the processes of the flowchart shown in FIG. 25. The route display module 310 except the position monitor means 312 is executed by the processor 13 of the schedule management apparatus 10 and the client program 400 is executed by the processor 23 of the terminal 20.

In the step S705, the processor 23 of the terminal 20 searches the registered schedule and generates, before the time to start the registered action, a route request signal that requests route information and route data. In the route information, a time to change trains, a route on a map, and the like are included. In the route data, as shown in FIG. 15 and FIG. 16, a probability of existence of the user 352 on the route of the user 352 is included.

In the step S710, the processor 13 of the schedule management apparatus 10 obtains, based on the movement means, a route status on the route of the movement means, for example delay information of a train, traffic jam information of a road, or the like that are on the route, from the external server 3.

In the step S715, the processor 13 of the schedule management apparatus 10 determines whether a change of the movement means is necessary or not, based on the obtained route status. In the obtained status, for example, a delay time corresponding to the movement means, such as a delay time of a train, an estimated time to pass through a traffic jam, or the like, is included. The processor 13 extracts the delay time from the obtained route status and determines whether a change of the movement means is necessary or not. For example, the processor 13 determines that a change of the movement means is necessary when an arrival time of a train becomes later than a departure time of a train to transfer due to a delay. When the processor 13 determines that any change of the movement means is not necessary, the processor 13 generates a route signal that represents the route information and the route data in order to guide the user along the route of the registered movement means. In addition, when the processor 13 determines that a change of the movement means is necessary, the processor 13 executes the process in the step S735 in order to change the movement means. The route data may be calculated when the movement means is determined.

In the step S720, the processor 23 of the terminal 20 displays the route information based on the route signal. The user moves based on the displayed route information.

In the step S725, the processor 23 of the terminal 20 determines whether the terminal 20 itself is moving along the route of the registered movement means. For example, the processor 23 measures the self-position by sensor 25 and determines whether the terminal 20 itself is moving along the route of the movement means. When the processor 23 determines that the terminal 20 itself is moving along the route of the movement means, the processor 23 executes the process in the step S730. When the processor 23 determines that the terminal 20 itself is not moving along the route of the movement means, the processor 23 generates a route change signal that requests a change of route, in order to execute the process in the step S735. The processor 23 of the terminal 20 may obtain the position of the user from the external server 3 via the schedule management apparatus 10. For example, the processor 13 of the schedule management apparatus 10 obtains the position of the user based on an image taken by an optical sensor such as a surveillance camera, and transmits information that represents the obtained position of the user to the terminal 20. In this case, the processor 13 of the schedule management apparatus 10 obtains images that the optical sensor took and searches the obtained images for an image in which the user is taken. Furthermore, the processor 13 obtains a position where the image, in which the user is taken, is taken as the position of the user. The processor 13 may obtain transit information of the user from a gate such as an automatic ticket gate in a train station and obtain the position of the user based on the obtained transit information.

For example, the processor 23 of the terminal 20 determines whether the terminal 20 is moving along the route, based on the self-position and the route data. As shown in FIG. 15 and FIG. 16, the processor 23 extracts, in the area 353 where the user 352 exists, a probability of self-existence from the route data, and determines whether the probability at the current time in the extracted probability of existence 360 is equal to or greater than a predetermined threshold value. When the probability at the current time is equal to or greater than the predetermined threshold value th, the processor 23 determines that the user is moving along the route of the movement means. In addition, in the route data, a range of time in which the probability of existence of the terminal 20 itself in the area 353 is equal to or greater than the threshold value may be registered. In this case, the processor 23 extracts the range of time registered to the area 353 where the terminal 20 itself exists, and when the current time is included in the extracted range of time, the processor 23 determines that the user is moving along the route of the movement means.

When the user is moving along the route of the movement means, in the step S730, the processor 23 of the terminal 20 determines whether the user is arrived at the destination. When the user arrives at the destination, the processor 23 ends the client program 400. When the user is not arrived at the destination, the processor 23 executes the process of the step S705 and carries on the guidance.

When the user cannot move along the registered route due to a delay or the like, or when the user is not moving along the route, the processor 13 of the schedule management apparatus 10 executes, at the step S735, the route change module 320. By the execution of the route change module 320, a search of a movement means is executed again. After a research, the processor 13 generates a signal for the processor 23 of the terminal 20 to execute the process in the step S705.

As described above, by the position monitor means 312 being executed by the terminal 20, the load of the schedule management apparatus 10 is reduced. In addition, since the processor 23 of the terminal 20 can sequentially determine whether the terminal 20 itself is moving along the route, a deviation from the route can be detected early.

(Operation of budget estimation program) The schedule management system 1 may estimate a budget of the user and use this estimation in the determination of the day-schedule and the like. For example, the storage device 12 of the schedule management apparatus 10 stores a budget estimation program that estimates a budget. The budget estimation program is provided with a budget estimation means. The processor 13 of the schedule management apparatus 10 estimates, by executing the budget estimation means of the budget estimation program, spending tendency and a sum of spent amount from past schedules of the user. The budget is estimated based on the estimated sum of spent amount. A budget to allocate to each schedule is estimated based on the estimated budget and the spending tendency. The processor 13 compares the estimated budget with the budget included in the conditions 153 of the day-schedule database 150, and determines the day-schedule. Similarly for the plan, the processor 13 compares the budget included in the conditions 175 of the event database 170 and the estimated budget. In addition, the action-schedule is also determined by comparing the budget included in the conditions 165 of the action database 160 and the estimated budget.

The processor 13 of the schedule management apparatus 10 may execute the budget estimation program and manage the budget based on annual income or monthly income of the user. For example, the processor 13 estimates spending tendency from past schedules of the user and allocates the budget based on the estimated spending tendency.

When the user starts using the schedule management system 1, the processor 13 of the schedule management apparatus 10 accepts personal information. In the personal information, monthly or annual income, information on financial institutions used by the user, and the like are included.

When the monthly or annual income is not registered to the personal information, the processor 13 of the schedule management apparatus 10 may predict the income based on past action history. For example, day-schedules and action-schedules that the user selected in the past are extracted from the day-schedule database 150 and the action database 160. Past spending of the user is calculated based on budgets in the conditions 153 included in the extracted day-schedules and budgets in the conditions 165 included in the extracted action-schedules. The processor 13 estimates the income based on calculated spending. For example, an estimated income is calculated by multiplying a desired value to the calculated spending.

The processor 13 of the schedule management apparatus 10 estimates a budget in accordance with the type of the plan category based on the calculated predicted income. For example, the processor 13 calculates a ratio for each type of the plan category in the past spending of the user and estimates budgets in accordance with the types of the plan category by multiplying the calculated ratio to the predicted income. The ratio of each type of plan category may be inputted by the user and stored to the storage device 12 of the schedule management apparatus 10. The ratio may be set for only a part of the plan category and the processor 13 may calculate budgets for only a part of the plan category.

(Variation example) The processor 13 of the schedule management apparatus 10 may execute the schedule setting program 100 and carry out, in the step S240, procedures of purchasing the ticket necessary for the action-schedule, such as reserved seat ticket for an express train or an event venue. In this case, the processor 13 may change, when the movement means is changed, the purchased reserved seat in accordance with the change of movement means in the step S520 of the schedule adjustment program 200.

The route display module 310 of the route guidance program 300 may be configured so that the processor 13 of the schedule management apparatus 10 purchases the fare, when the user moves along the route of the registered movement means, by performing a communication with the external server 3. In the step S410 in the flowchart shown in FIG. 14, the processor 13 of the schedule management apparatus 10 can determine that the user boarded or exited a vehicle such as a train. For this reason, the processor 13 calculates the fare based on the positions where the user boarded and exited the vehicle. The processor 13 may generate a signal related to the calculated fare and purchase the fare by communicating with the external server 3.

Although in the step S105 of the schedule setting program 100, an example in which the user specifies the plan category and participants of a plan as a plan was shown, this is not limitative. For example, the user may specify the date and the place in the step S105. As a result, the processor 13 of the schedule management apparatus 10 that execute the schedule setting program 100 accepts an event of which the priority is higher than the registered schedule and of which the day-schedule overlaps with the registered schedule.

The processes described above is an example, and order and process content of each step may be changed within a range of not inhibiting functions. In addition, the described configurations may be arbitrarily changed and/or arbitrarily combined within a range of not inhibiting functions. The technologies in each embodiment may be used in other embodiment as long as no technical contradiction occurs. For example, each step may be executed in a schedule management program in which the schedule setting program 100, the schedule adjustment program 200 and the route guidance program 300 are combined.

(Schedule management apparatus according to an embodiment) The schedule management apparatus according to an embodiment is understood for example as below.

A schedule management apparatus according to a first aspect is provided with a storage device that stores a schedule management program and a processor that executes the schedule management program. The schedule management program is provided with a first day-schedule suggestion means, a second day-schedule suggestion means, and a day-schedule registration means.

By execution by the schedule management apparatus of the first day-schedule suggestion means, the second day-schedule suggestion means, and the day-schedule registration means, a day-schedule is determined by an approval or a rejection of the user to the suggestion day-schedule. For this reason, an effort of the user for determining a schedule is reduced. In addition, the day-schedule is determined also by the participant performing approval or rejection to the suggestion day-schedule. For this reason, an effort to adjust an action-schedule is reduced even though a plurality of participants exists in the action-schedule.

A schedule management apparatus according to a second aspect is the schedule management apparatus according to the first aspect, and the first day-schedule suggestion means is configured to calculate a probability with respect to a day-schedule and select a suggestion day-schedule based on the calculated probability.

Since the suggestion day-schedule is selected according to a probability, a selection of only a same day-schedule is suppressed. Therefore, it becomes easier for the user to accept the suggestion of the schedule management apparatus without losing interest in suggested day-schedules.

A schedule management apparatus according to a third aspect is the schedule management apparatus according to the second aspect, and is configured to calculate the probability based on data for indices that are registered with respect to each day-schedule.

A schedule management apparatus according to a fourth aspect is the schedule management apparatus according to the third aspect, is provided with a coefficient adjustment module, and is configured to calculate the probability based on the data for indices and a coefficient.

A schedule management apparatus according to a fifth aspect is the schedule management apparatus according to the fourth aspect and is configured to receive a day-schedule answer signal that includes a signal that represents a rating by the user, and adjust the coefficient based on the rating by the user.

A schedule management apparatus according to a sixth aspect is the schedule management apparatus according to the second aspect, and is configured to select the day-schedule based on a condition registered with respect to each day-schedule.

By providing a condition for selecting a day-schedule, a suggestion of a day-schedule that cannot actually be carried out can be suppressed.

A schedule management apparatus according to a seventh aspect is the schedule management apparatus according to the first aspect and is configured so that a day-schedule includes a destination and a date.

A schedule management apparatus according to an eighth aspect is the schedule management apparatus according to the first aspect and the processor is configured to determine the suggestion day-schedule based on a plan category in which the suggestion day-schedule is classified and a budget with respect to the plan category in which the suggestion day-schedule is classified.

A schedule management apparatus according to a ninth aspect is the schedule management apparatus according to the first aspect and is configured so that the schedule management program is provided with a first action suggestion means, a second action suggestion means, and an action registration means.

By an execution by the schedule management apparatus of the first action suggestion means, the second action suggestion means, and the action registration means, an action-schedule including information representing a movement means is suggested to the user. As a result, the action-schedule is determined by the user performing an approval or a rejection of the action-schedule. For this reason, an effort of the user for determining a schedule is reduced. In addition, the action-schedule is determined also by the participant performing approval or rejection to the action-schedule. For this reason, an effort to adjust an action-schedule is reduced even though a plurality of participants exists in the action-schedule.

A schedule management apparatus according to a tenth aspect is the schedule management apparatus according to the ninth aspect and is configured so that the action registration means transmits signals that represent a making of a reservation to an external server based on the second action signal and a making of a payment of a fee.

A schedule management apparatus according to an eleventh aspect is the schedule management apparatus according to the ninth aspect and is configured so that the schedule management program is provided with a route change means.

The schedule management apparatus can change a day-schedule or an action-schedule by executing the route change means when the user deviates from the route while moving or when the user cannot reach the destination by the scheduled time due to a train delay or the like. By a user performing an approval or a rejection with respect to a changed day-schedule or a changed action-schedule, the day-schedule or the action-schedule is changed. For this reason, an effort of the user for changing a schedule is reduced. In addition, the day-schedule or the action-schedule is changed also by the participant performing approval or rejection to the changed day-schedule or the changed action-schedule. For this reason, an effort to adjust a schedule is reduced even though a plurality of participants exists in the action-schedule.

A schedule management apparatus according to a twelfth aspect is the schedule management apparatus according to the eleventh aspect and is configured so that the route change means is executed based on a result of determining whether the user is moving along the route, by use of a probability of existence of the user while moving along the route, in an area including a position where the user exists.

The position of the user can be always monitored by calculating a probability in an area on the route. For this reason, the schedule management apparatus can rapidly change the route when the user deviates from the route.

A schedule management apparatus according to a thirteenth aspect is the schedule management apparatus according to the eleventh aspect and is configured so that the schedule management program is provided with a position monitor means.

By an execution of the position monitor means by the schedule management apparatus, a terminal load can be reduced.

A schedule management system according to a fourteenth aspect is provided with the schedule management apparatus according to the eleventh aspect and a terminal. The terminal executes the position monitor means.

By an execution of the position monitor means by the terminal, a load of the schedule management apparatus can be reduced.

A recording medium according to a fifteenth aspect stores a schedule management program. The stored schedule management program makes a processor execute determining, based on a registered schedule, a suggestion day-schedule that is a day-schedule to be suggested to a user, and generating a signal for suggesting the suggestion day-schedule to the user. In addition, the schedule management program makes the processor execute generating, based on a signal that represents an approval to the suggestion day-schedule, a signal for confirming the suggestion day-schedule with the participant except the user. The schedule management program makes the processor execute generating, based on a signal that represent an approval to the suggestion day-schedule, a signal that notifies the participant of the suggestion day-schedule, and registering the suggestion day-schedule in the registered schedule of the participant.

As a result, the day-schedule is determined by an approval or a rejection by the user to the suggestion day-schedule. For this reason, an effort of the user for determining a schedule is reduced. In addition, the day-schedule is determined also by an approval or a rejection performed by the participant to the suggestion day-schedule. For this reason, an effort for adjusting a schedule is reduced even though a plurality of participant exists in the action-schedule.

The present application claims priority based on Japanese Patent Application No. 2020-141850, filed on August 25, 2020.

**EP 4 148 636 B1**

**Claims**

1. A schedule management apparatus (10) comprising:

a storage device (12) configured to store a schedule management program (100); and
a processor (23) configured to read out and execute the schedule management program (100),
wherein the schedule management program (100) comprises:

a first day-schedule suggestion means (112) configured to determine, based on a registered schedule that is registered with respect to a set participant, a suggestion day-schedule that is a day-schedule to be suggested to the participant, and generate a first day-schedule suggestion signal for suggesting the determined suggestion day-schedule to a user included in the participant;
a second day-schedule suggestion means (114) configured to generate, based on a first day-schedule answer signal that represents an approval to the suggestion day-schedule in response to the first day-schedule suggestion signal, a second day-schedule suggestion signal for confirming the determined suggestion day-schedule with the participant except the user; and
a day-schedule registration means (116) configured to generate, based on a second day-schedule answer signal that represents an approval to the suggestion day-schedule in response to the second day-schedule suggestion signal, a day-schedule notification signal that notifies the participant of the suggestion day-schedule, and register the suggestion day-schedule in the registered schedule of the participant,

wherein the storage device (12) is further configured to store a day-schedule database in which a list of day-schedules is registered,
wherein the first day-schedule suggestion means (112) is configured to:

calculate probabilities with respect to day-schedules registered in the day-schedule database; and
select, by use of the calculated probabilities, the suggestion day-schedule from the day-schedules registered in the day-schedule database so that a day-schedule candidate is selected is selected with the calculated probabilities.

2. The schedule management apparatus (10) according to claim 1,

wherein data for indices with respect to each day-schedule is registered in the day-schedule database, and
wherein the first day-schedule suggestion means (112) is further configured to calculate, based on the data for indices, the probabilities with respect to the day-schedules registered in the day-schedule database.

3. The schedule management apparatus (10) according to claim 2,

wherein the schedule management program (100) further comprises a coefficient adjustment module (130) configured to adjust a coefficient registered with respect to the user, and
wherein the first day-schedule suggestion means (112) is further configured to calculate, based on the data for indices and the coefficient, the probabilities with respect to day-schedules registered in the day-schedule database.

4. The schedule management apparatus (10) according to claim 3,

wherein the schedule management program (100) is further configured to receive a day-schedule answer signal that includes a signal that represents a rating by the user with respect to the suggestion day-schedule, and
wherein the coefficient adjustment module (130) is configured to adjust the coefficient based on the rating.

5. The schedule management apparatus (10) according to any one of claims 1 to 4,

wherein a condition with respect to each day-schedule is registered in the day-schedule database, and
wherein the schedule management program (100) is further configured to select the suggestion day-schedule from a group of day-schedule that meets the condition included in the day-schedules registered in the day-schedule database.

6. The schedule management apparatus (10) according to any one of claims 1 to 5,

wherein the suggestion day-schedule includes a destination where the participant moves to and a date when the participant moves.

7. The schedule management apparatus (10) according to any one of claims 1 to 6,

wherein the storage device (12) is further configured to store a budget estimation program configured to estimate a budget with respect to a plan category that represents a category of an action of the user,
wherein the processor (23) is further configured to read out and execute the budget estimation program, and
wherein the schedule management program (100) is further configured to determine the suggestion day-schedule based on the plan category in which the suggestion day-schedule is classified and the budget with respect to the plan category in which the suggestion day-schedule is classified.

8. The schedule management apparatus (10) according to any one of claims 1 to 7,
wherein the schedule management program (100) further comprises:

a first action suggestion means (122) configured to determine an action-schedule that includes information representing a movement means, based on the suggestion day-schedule, and generate a first action suggestion signal for suggesting the determined action-schedule to the user;
a second action suggestion means (124) configured to generate, based on a first action answer signal in response to the first action suggestion signal, a second action suggestion signal for confirming the determined action-schedule with the participant except the user; and
an action registration means (126) configured to generate, based on a second action answer signal in response to the second action suggestion signal, an action notification signal that notifies the participant of the action-schedule, and register the action-schedule in the registered schedule of the participant.

9. The schedule management apparatus (10) according to claim 8,

wherein the action registration means (126) is further configured to transmit a reservation signal that represents a making of a reservation to an external server, based on the second action answer signal, and
wherein the reservation signal that represents the making of the reservation includes a signal that represents a making of a payment of a fee, based on the second action answer signal.

10. The schedule management apparatus (10) according to claim 8 or 9,

wherein the schedule management program (100) further comprises a route change means (322) configured to execute the first day-schedule suggestion means (112) or the first action suggestion means (122), based on a determination by a position monitor means (312) or a determination by a passage time monitor means,
wherein the position monitor means (312) is configured to determine whether the user is moving along a route with respect to the movement means, and
wherein the passage time monitor means is configured to determine whether the user can move along the route with respect to the movement means.

11. The schedule management apparatus (10) according to claim 10,
wherein the position monitor means (312) is further configured to determine whether the user is moving along the route with respect to the movement means in an area including a position where the user exists, based on a probability of existence of the user when the user moves along the route with respect to the movement means.

12. The schedule management apparatus (10) according to claim 10 or 11,
wherein the schedule management program (100) further comprises the position monitor means (312).

13. A schedule management system comprising:

the schedule management apparatus (10) according to claim 10 or 11; and
a terminal,
wherein the terminal is configured to execute the position monitor means (312).

14. A recording medium configured to store a schedule management program (100) for making a processor (23) execute:

determining, based on a registered schedule that is registered with respect to a set participant, a suggestion day-schedule that is a day-schedule to be suggested to the participant, and generating a first day-schedule suggestion signal for suggesting the determined suggestion day-schedule to a user included in the participant;

generating, based on a first day-schedule answer signal that represents an approval to the suggestion day-schedule in response to the first day-schedule suggestion signal, a second day-schedule suggestion signal for confirming the determined suggestion day-schedule with the participant except the user; and

generating, based on a second day-schedule answer signal that represents an approval to the suggestion day-schedule in response to the second day-schedule suggestion signal, a day-schedule notification signal that notifies the participant of the suggestion day-schedule, and registering the suggestion day-schedule in the registered schedule of the participant;

calculating probabilities with respect to day-schedules registered in a day-schedule database in which a list of day-schedules is registered; and

selecting, by use of the calculated probabilities, the suggestion day-schedule from the day-schedules registered in the day-schedule database so that a day-schedule candidate is selected with the calculated probabilities.

## Patentansprüche

1. Zeitplanverwaltungsvorrichtung (10), umfassend:

eine Speichervorrichtung (12), die ausgebildet ist, ein Zeitplanverwaltungsprogramm (100) zu speichern; und einen Prozessor (23), der ausgebildet ist, das Zeitplanverwaltungsprogramm (100) auszulesen und auszuführen,

wobei das Zeitplanverwaltungsprogramm (100) Folgendes umfasst:

ein erstes Tageszeitplan-Vorschlagsmittel (112), das ausgebildet ist, basierend auf einem registrierten Zeitplan, der in Bezug auf einen festgelegten Teilnehmer registriert ist, einen Vorschlags-Tageszeitplan zu bestimmen, der ein Tageszeitplan ist, der dem Teilnehmer vorgeschlagen werden soll, und ein erstes Tageszeitplan-Vorschlagssignal zu erzeugen, um den bestimmten Vorschlags-Tageszeitplan einem im Teilnehmer eingeschlossenen Benutzer vorzuschlagen;

ein zweites Tageszeitplan-Vorschlagsmittel (114), das ausgebildet ist, basierend auf einem ersten Tageszeitplan-Antwortsignal, das eine Zustimmung zu dem Vorschlags-Tageszeitplan als Reaktion auf das erste Tageszeitplan-Vorschlagssignal darstellt, ein zweites Tageszeitplan-Vorschlagssignal zum Bestätigen des bestimmten Vorschlags-Tageszeitplans mit dem Teilnehmer mit Ausnahme des Benutzers zu erzeugen; und

ein Tageszeitplan-Registrierungsmittel (116), das ausgebildet ist, basierend auf einem zweiten Tageszeitplan-Antwortsignal, das eine Zustimmung zu dem Vorschlags-Tageszeitplan als Reaktion auf das zweite Tageszeitplan-Vorschlagssignal darstellt, ein Tageszeitplan-Benachrichtigungssignal zu erzeugen, das den Teilnehmer über den Vorschlags-Tageszeitplan benachrichtigt, und den Vorschlags-Tageszeitplan in dem registrierten Zeitplan des Teilnehmers zu registrieren,

wobei die Speichervorrichtung (12) weiter ausgebildet ist, eine Tageszeitplan-Datenbank zu speichern, in der eine Liste von Tageszeitplänen registriert ist,

wobei das erste Tageszeitplan-Vorschlagsmittel (112) ausgebildet ist:

Wahrscheinlichkeiten in Bezug auf in der Tageszeitplan-Datenbank registrierte Tageszeitpläne zu berechnen; und

unter Verwendung der berechneten Wahrscheinlichkeiten den Vorschlags-Tageszeitplan aus den in der Tageszeitplan-Datenbank registrierten Tageszeitplänen auszuwählen, sodass ein Tageszeitplan-Kandidat mit den berechneten Wahrscheinlichkeiten ausgewählt wird.

2. Zeitplanverwaltungsvorrichtung (10) nach Anspruch 1,

wobei Daten für Indizes in Bezug auf jeden Tageszeitplan in der Tageszeitplan-Datenbank registriert sind, und wobei das erste Tageszeitplan-Vorschlagsmittel (112) weiter ausgebildet ist, basierend auf den Daten für Indizes, die Wahrscheinlichkeiten in Bezug auf die in der Tageszeitplan-Datenbank registrierten Tageszeitpläne zu berechnen.

3. Zeitplanverwaltungsvorrichtung (10) nach Anspruch 2,

wobei das Zeitplanverwaltungsprogramm (100) weiter ein Koeffizienten-Anpassungsmodul (130) umfasst, das ausgebildet ist, einen in Bezug auf den Benutzer registrierten Koeffizienten anzupassen, und wobei das erste Tageszeitplan-Vorschlagsmittel (112) weiter ausgebildet ist, basierend auf den Daten für Indizes und dem Koeffizienten, die Wahrscheinlichkeiten in Bezug auf in der Tageszeitplan-Datenbank registrierte Tageszeitpläne zu berechnen.

4. Zeitplanverwaltungsvorrichtung (10) nach Anspruch 3,

wobei das Zeitplanverwaltungsprogramm (100) weiter ausgebildet ist, ein Tageszeitplan-Antwortsignal zu empfangen, das ein Signal einschließt, das eine Bewertung durch den Benutzer in Bezug auf den Vorschlags-Tageszeitplan darstellt, und wobei das Koeffizienten-Anpassungsmodul (130) ausgebildet ist, den Koeffizienten, basierend auf der Bewertung, anzupassen.

5. Zeitplanverwaltungsvorrichtung (10) nach einem der Ansprüche 1 bis 4,

wobei eine Bedingung in Bezug auf jeden Tageszeitplan in der Tageszeitplan-Datenbank registriert ist, und wobei das Zeitplanverwaltungsprogramm (100) weiter ausgebildet ist, den Vorschlags-Tageszeitplan aus einer Gruppe von Tageszeitplänen auszuwählen, die die Bedingung erfüllt, die in den in der Tageszeitplan-Datenbank registrierten Tageszeitplänen eingeschlossen ist.

6. Zeitplanverwaltungsvorrichtung (10) nach einem der Ansprüche 1 bis 5, wobei der Vorschlags-Tageszeitplan einen Zielort einschließt, zu dem sich der Teilnehmer bewegt, und ein Datum, an dem sich der Teilnehmer bewegt.

7. Zeitplanverwaltungsvorrichtung (10) nach einem der Ansprüche 1 bis 6,

wobei die Speichervorrichtung (12) weiter ausgebildet ist, ein Budgetschätzprogramm zu speichern, das ausgebildet ist, ein Budget in Bezug auf eine Plankategorie zu schätzen, die eine Kategorie einer Aktion des Benutzers darstellt, wobei der Prozessor (23) weiter ausgebildet ist, das Budgetschätzprogramm auszulesen und auszuführen, und wobei das Zeitplanverwaltungsprogramm (100) weiter ausgebildet ist, den Vorschlags-Tageszeitplan, basierend auf der Plankategorie, in die der Vorschlags-Tageszeitplan klassifiziert ist, und dem Budget in Bezug auf die Plankategorie, in die der Vorschlags-Tageszeitplan klassifiziert ist, zu bestimmen.

8. Zeitplanverwaltungsvorrichtung (10) nach einem der Ansprüche 1 bis 7, wobei das Zeitplanverwaltungsprogramm (100) weiter Folgendes umfasst:

ein erstes Aktionsvorschlagsmittel (122), das ausgebildet ist, basierend auf dem Vorschlags-Tageszeitplan, einen Aktionszeitplan zu bestimmen, der Informationen einschließt, die ein Fortbewegungsmittel darstellen, und ein erstes Aktionsvorschlagssignal zu erzeugen, um den bestimmten Aktionszeitplan dem Benutzer vorzuschlagen; ein zweites Aktionsvorschlagsmittel (124), das ausgebildet ist, basierend auf einem ersten Aktions-Antwortsignal als Reaktion auf das erste Aktionsvorschlagssignal, ein zweites Aktionsvorschlagssignal zum Bestätigen des bestimmten Aktionszeitplans mit dem Teilnehmer mit Ausnahme des Benutzers zu erzeugen; und ein Aktions-Registrierungsmittel (126), das ausgebildet ist, basierend auf einem zweiten Aktions-Antwortsignal als Reaktion auf das zweite Aktionsvorschlagssignal, ein Aktions-Benachrichtigungssignal zu erzeugen, das den Teilnehmer über den Aktionszeitplan benachrichtigt, und den Aktionszeitplan in dem registrierten Zeitplan des Teilnehmers zu registrieren.

9. Zeitplanverwaltungsvorrichtung (10) nach Anspruch 8,

wobei das Aktions-Registrierungsmittel (126) weiter ausgebildet ist, basierend auf dem zweiten Aktions-Antwortsignal, ein Reservierungssignal, das eine Durchführung einer Reservierung darstellt, an einen externen Server zu übertragen, und wobei das Reservierungssignal, das die Durchführung der Reservierung darstellt, basierend auf dem zweiten Aktions-Antwortsignal, ein Signal einschließt, das eine Durchführung einer Zahlung einer Gebühr darstellt.

**10.** Zeitplanverwaltungsvorrichtung (10) nach Anspruch 8 oder 9,

wobei das Zeitplanverwaltungsprogramm (100) weiter ein Routenänderungsmittel (322) umfasst, das ausgebildet ist, basierend auf einer Bestimmung durch ein Positionsüberwachungsmittel (312) oder einer Bestimmung durch ein Durchgangszeitüberwachungsmittel, das erste Tageszeitplan-Vorschlagsmittel (112) oder das erste Aktionsvorschlagsmittel (122) auszuführen,
wobei das Positionsüberwachungsmittel (312) ausgebildet ist, zu bestimmen, ob sich der Benutzer entlang einer Route in Bezug auf das Fortbewegungsmittel bewegt, und
wobei das Durchgangszeitüberwachungsmittel ausgebildet ist, zu bestimmen, ob sich der Benutzer entlang der Route in Bezug auf das Fortbewegungsmittel bewegen kann.

**11.** Zeitplanverwaltungsvorrichtung (10) nach Anspruch 10,
wobei das Positionsüberwachungsmittel (312) weiter ausgebildet ist, basierend auf einer Wahrscheinlichkeit des Existierens des Benutzers, wenn sich der Benutzer entlang der Route in Bezug auf das Fortbewegungsmittel bewegt, zu bestimmen, ob sich der Benutzer entlang der Route in Bezug auf das Fortbewegungsmittel in einem Bereich bewegt, der eine Position einschließt, an der der Benutzer existiert.

**12.** Zeitplanverwaltungsvorrichtung (10) nach Anspruch 10 oder 11,
wobei das Zeitplanverwaltungsprogramm (100) weiter das Positionsüberwachungsmittel (312) umfasst.

**13.** Zeitplanverwaltungssystem, umfassend:

die Zeitplanverwaltungsvorrichtung (10) nach Anspruch 10 oder 11; und
ein Endgerät,
wobei das Endgerät ausgebildet ist, das Positionsüberwachungsmittel (312) auszuführen.

**14.** Aufzeichnungsmedium, das ausgebildet ist, ein Zeitplanverwaltungsprogramm (100) zu speichern, um einen Prozessor (23) Folgendes ausführen zu lassen:

Bestimmen, basierend auf einem registrierten Zeitplan, der in Bezug auf einen festgelegten Teilnehmer registriert ist, eines Vorschlags-Tageszeitplans, der ein Tageszeitplan ist, der dem Teilnehmer vorgeschlagen werden soll, und Erzeugen eines ersten Tageszeitplan-Vorschlagssignals, um den bestimmten Vorschlags-Tageszeitplan einem im Teilnehmer eingeschlossenen Benutzer vorzuschlagen;
Erzeugen, basierend auf einem ersten Tageszeitplan-Antwortsignal, das eine Zustimmung zu dem Vorschlags-Tageszeitplan als Reaktion auf das erste Tageszeitplan-Vorschlagssignal darstellt, eines zweiten Tageszeitplan-Vorschlagssignals zum Bestätigen des bestimmten Vorschlags-Tageszeitplans mit dem Teilnehmer mit Ausnahme des Benutzers; und
Erzeugen, basierend auf einem zweiten Tageszeitplan-Antwortsignal, das eine Zustimmung zu dem Vorschlags-Tageszeitplan als Reaktion auf das zweite Tageszeitplan-Vorschlagssignal darstellt, eines Tageszeitplan-Benachrichtigungssignals, das den Teilnehmer über den Vorschlags-Tageszeitplan benachrichtigt, und
Registrieren des Vorschlags-Tageszeitplans in dem registrierten Zeitplan des Teilnehmers; Berechnen von Wahrscheinlichkeiten in Bezug auf in einer Tageszeitplan-Datenbank registrierte Tageszeitpläne, in der eine Liste von Tageszeitplänen registriert ist; und
Auswählen, unter Verwendung der berechneten Wahrscheinlichkeiten, des Vorschlags-Tageszeitplans aus den in der Tageszeitplan-Datenbank registrierten Tageszeitplänen, so dass ein Tageszeitplan-Kandidat mit den berechneten Wahrscheinlichkeiten ausgewählt wird.

## Revendications

**1.** Appareil de gestion de planification (10) comprenant :

un dispositif de stockage (12) configuré pour stocker un programme de gestion de planification (100) ; et un processeur (23) configuré pour lire et mettre en œuvre le programme de gestion de planification (100),
dans lequel le programme de gestion de planification (100) comprend :

un premier moyen de suggestion de planification journalière (112) configuré pour déterminer, sur la base d'une planification enregistrée qui est enregistrée à l'égard d'un participant défini, une planification journalière de suggestion qui est une planification journalière devant être suggérée au participant, et générer un premier signal de suggestion de planification journalière pour suggérer la planification journalière de suggestion déterminée à un utilisateur inclus dans le participant ;

un second moyen de suggestion de planification journalière (114) configuré pour générer, sur la base d'un premier signal de réponse de planification journalière qui représente une approbation de la planification journalière de suggestion en réponse au premier signal de suggestion de planification journalière, un second signal de suggestion de planification journalière pour confirmer la planification journalière de suggestion déterminée avec le participant à l'exception de l'utilisateur ; et

un moyen d'enregistrement de planification journalière (116) configuré pour générer, sur la base d'un second signal de réponse de planification journalière qui représente une approbation de la planification journalière de suggestion en réponse au second signal de suggestion de planification journalière, un signal de notification de planification journalière qui notifie la planification journalière de suggestion au participant, et enregistrer la planification journalière de suggestion dans la planification enregistrée du participant,

dans lequel le dispositif de stockage (12) est en outre configuré pour stocker une base de données de planification journalière dans laquelle une liste de planifications journalières est enregistrée,

dans lequel le premier moyen de suggestion de planification journalière (112) est configuré pour :

calculer des probabilités par rapport à des planifications journalières enregistrées dans la base de données de planification journalière ; et

sélectionner, par utilisation des probabilités calculées, la planification journalière de suggestion parmi les planifications journalières enregistrées dans la base de données de planification journalière de sorte qu'un candidat de planification journalière est sélectionné avec les probabilités calculées.

2. Appareil de gestion de planification (10) selon la revendication 1,

dans lequel des données pour des indices par rapport à chaque planification journalière sont enregistrées dans la base de données de planification journalière, et

dans lequel le premier moyen de suggestion de planification journalière (112) est en outre configuré pour calculer, sur la base des données pour des indices, les probabilités par rapport à des planifications journalières enregistrées dans la base de données de planification journalière.

3. Appareil de gestion de planification (10) selon la revendication 2,

dans lequel le programme de gestion de planification (100) comprend en outre un module d'ajustement de coefficient (130) configuré pour ajuster un coefficient enregistré à l'égard de l'utilisateur, et

dans lequel le premier moyen de suggestion de planification journalière (112) est en outre configuré pour calculer, sur la base des données pour des indices et du coefficient, les probabilités par rapport à des planifications journalières enregistrées dans la base de données de planification journalière.

4. Appareil de gestion de planification (10) selon la revendication 3,

dans lequel le programme de gestion de planification (100) est en outre configuré pour recevoir un signal de réponse de planification journalière qui inclut un signal qui représente une évaluation par l'utilisateur par rapport à la planification journalière de suggestion, et

dans lequel le module d'ajustement de coefficient (130) est configuré pour ajuster le coefficient sur la base de l'évaluation.

5. Appareil de gestion de planification (10) selon l'une quelconque des revendications 1 à 4,

dans lequel une condition par rapport à chaque planification journalière est enregistrée dans la base de données de planification journalière, et

dans lequel le programme de gestion de planification (100) est en outre configuré pour sélectionner la planification journalière de suggestion parmi un groupe de planifications journalières qui satisfait la condition incluse dans les planifications journalières enregistrées dans la base de données de planification journalière.

6. Appareil de gestion de planification (10) selon l'une quelconque des revendications 1 à 5,
dans lequel la planification journalière de suggestion inclut une destination où le participant se déplace et une date à laquelle le participant se déplace.

**7.** Appareil de gestion de planification (10) selon l'une quelconque des revendications 1 à 6,

dans lequel le dispositif de stockage (12) est en outre configuré pour stocker une estimation de budget, configuré pour estimer un budget par rapport à une catégorie de plan qui représente une catégorie d'une action de l'utilisateur,

dans lequel le processeur (23) est en outre configuré pour lire et mettre en œuvre le programme d'estimation de budget, et

dans lequel le programme de gestion de planification (100) est en outre configuré pour déterminer la planification journalière de suggestion sur la base de la catégorie de plan dans laquelle la planification journalière de suggestion est classée et du budget par rapport à la catégorie de plan dans laquelle la planification journalière de suggestion est classée.

**8.** Appareil de gestion de planification (10) selon l'une quelconque des revendications 1 à 7, dans lequel le programme de gestion de planification (100) comprend en outre :

un premier moyen de suggestion d'action (122) configuré pour déterminer une planification d'action qui inclut des informations représentant un moyen de déplacement, sur la base de la planification journalière de suggestion, et générer un premier signal de suggestion d'action pour suggérer la planification d'action déterminée à l'utilisateur ;

un second moyen de suggestion d'action (124) configuré pour générer, sur la base d'un premier signal de réponse d'action en réponse au premier signal de suggestion d'action, un second signal de suggestion d'action pour confirmer la planification d'action déterminée avec le participant à l'exception de l'utilisateur ; et

un moyen d'enregistrement d'action (126) configuré pour générer, sur la base d'un second signal de réponse d'action en réponse au second signal de suggestion d'action, un signal de notification d'action qui notifie la planification d'action au participant, et enregistrer la planification d'action dans la planification enregistrée du participant.

**9.** Appareil de gestion de planification (10) selon la revendication 8,

dans lequel le moyen d'enregistrement d'action (126) est en outre configuré pour transmettre un signal de réservation qui représente l'établissement d'une réservation auprès d'un serveur externe, sur la base du second signal de réponse d'action, et

dans lequel le signal de réservation qui représente l'établissement de la réservation inclut un signal qui représente l'établissement d'un paiement de frais, sur la base du second signal de réponse d'action.

**10.** Appareil de gestion de planification (10) selon la revendication 8 ou la revendication 9,

dans lequel le programme de gestion de planification (100) comprend en outre un moyen de changement d'itinéraire (322) configuré pour mettre en œuvre le premier moyen de suggestion de planification journalière (112) ou le premier moyen de suggestion d'action (122), sur la base d'une détermination par un moyen de surveillance de position (312) ou d'une détermination par un moyen de surveillance de temps de passage,

dans lequel le moyen de surveillance de position (312) est configuré pour déterminer si l'utilisateur se déplace le long d'un itinéraire par rapport au moyen de déplacement, et

dans lequel le moyen de surveillance de temps de passage est configuré pour déterminer si l'utilisateur peut se déplacer le long de l'itinéraire par rapport au moyen de déplacement.

**11.** Appareil de gestion de planification (10) selon la revendication 10, dans lequel le moyen de surveillance de position (312) est en outre configuré pour déterminer si l'utilisateur se déplace le long de l'itinéraire par rapport au moyen de déplacement dans une zone incluant une position où l'utilisateur existe, sur la base d'une probabilité d'existence de l'utilisateur lorsque l'utilisateur se déplace le long de l'itinéraire par rapport au moyen de déplacement.

**12.** Appareil de gestion de planification (10) selon la revendication 10 ou la revendication 11, dans lequel le programme de gestion de planification (100) comprend en outre le moyen de surveillance de position (312).

**13.** Système de gestion de planification comprenant :

l'appareil de gestion de planification (10) selon la revendication 10 ou la revendication 11 ; et,

un terminal,

dans lequel le terminal est configuré pour mettre en œuvre le moyen de surveillance de position (312).

**14.** Support d'enregistrement configuré pour stocker un programme de gestion de planification (100) pour amener un processeur (23) à mettre en œuvre :

la détermination, sur la base d'une planification enregistrée qui est enregistrée à l'égard d'un participant défini, d'une planification journalière de suggestion qui est une planification journalière devant être suggérée au participant, et la génération d'un premier signal de suggestion de planification journalière pour suggérer la planification journalière de suggestion déterminée à un utilisateur inclus dans le participant ;

la génération, sur la base d'un premier signal de réponse de planification journalière qui représente une approbation de la planification journalière de suggestion en réponse au premier signal de suggestion de planification journalière, d'un second signal de suggestion de planification journalière pour confirmer la planification journalière de suggestion déterminée avec le participant à l'exception de l'utilisateur ; et

la génération, sur la base d'un second signal de réponse de planification journalière qui représente une approbation de la planification journalière de suggestion en réponse au second signal de suggestion de planification journalière, d'un signal de notification de planification journalière qui notifie la planification journalière de suggestion au participant, et l'enregistrement de la planification journalière de suggestion dans la planification enregistrée du participant ;

le calcul de probabilités par rapport à des planifications journalières enregistrées dans une base de données de planification journalière dans laquelle une liste de planifications journalières est enregistrée ; et

la sélection, par utilisation des probabilités calculées, de la planification journalière de suggestion parmi les planifications journalières enregistrées dans la base de données de planification journalière de sorte qu'un candidat de planification journalière est sélectionné avec les probabilités calculées.

# FIG. 1

1:Schedule Management System

10

Schedule Management Apparatus

20-1

First Terminal

20-2

Second Terminal

3

External Server

2:Network

# FIG. 2

10:Schedule Management Apparatus

Input/Output Device `14`

Communication Device `11`

Processor `13`

Storage Device `12`

Schedule Setting Program `100`

Schedule Adjustment Program `200`

Route Guidance Program `300`

`4`

# FIG. 3

20:Terminal

24
Input/Output Device

21
Communication Device

23
Processor

25
Sensor

22
Storage Device

400
Client Program

4

# FIG. 4

100:Schedule Setting Program

110:Day-Schedule Suggestion Module

112
First Day-Schedule Suggestion Means

114
Second Day-Schedule Suggestion Means

116
Day-Schedule Registration Means

120:Action Suggestion Module

122
First Action Suggestion Means

124
Second Action Suggestion Means

126
Action Registration Means

# FIG. 5

110:Day-Schedule Suggestion Module

# F I G .  6

150:Day-Schedule Database

| 151:<br>Plan Category | 152:<br>Item | 153:Conditions | | | | 154:Data for Indices | | |
|---|---|---|---|---|---|---|---|---|
| | | Budget | Required Qualifications | Area | Weather | Degree of Importance | Frequency | Interest |
| Meeting | Area○○ | — | | | — | a1 | b1 | c1 |
| Meeting | Area×× | — | | | | a2 | b2 | c2 |
| | | | | | | a3 | b3 | c3 |
| | | | | | | | | |
| | | | | | | | | |
| | | | | | | | | |

EP 4 148 636 B1

# FIG. 7

120:Action Suggestion Module

20-1:First Terminal          10:Schedule Management Apparatus          20-2:Second Terminal

Start

Determining Action-Schedule to Suggest
S210

Displaying Action-Schedule
S215

Approved?
S220
NO          YES

Confirming with Participants
S225

Displaying Action-Schedule
S230

Approved?
S235
YES          NO

Registering Action-Schedule
S240

Displaying Action-Schedule
S245

Displaying Action-Schedule
S250

End

End

# F I G . 8

160:Action Database

| 161: Day-Schedule Category | 162: Destination | 163: Options | 164: Route | 165:Conditions | | | 166:Data for Indices | | |
|---|---|---|---|---|---|---|---|---|---|
| | | | | Budget | Required Qualifications | ... | Degree of Importance | Frequency | Interest |
| Meeting | Meeting Room A | — | | — | | | a1 | b1 | c1 |
| Meeting | Meeting Room B | — | | — | | | a2 | b2 | c2 |
| | | | | | | | | | |
| | | | | | | | | | |
| | | | | | | | | | |
| | | | | | | | | | |

EP 4 148 636 B1

# FIG. 9

600:Individual Schedule Database

| Day-Schedule | | | | Action-Schedule | | | | | |
|---|---|---|---|---|---|---|---|---|---|
| Date | Plan Category | Item | Participants | Category | Time | Location | Place | Budget | Reservation |
| 20XX/XX/XX | Meeting | Area○○ | A,B,C | Moving | XX:XX<br>XX:XX | XX Line<br>(Subway) | Car 1 | XX Yens | － |
| | | | | | XX:XX<br>XX:XX | XX Line<br>(Railway) | Car 1 | XX Yens | Resrved |
| | | | | | XX:XX<br>XX:XX | Road | Route A | 0 Yens | － |
| | | | | Meeting | XX:XX<br>XX:XX | Meeting Room<br>A | Seat 1 | 0 Yens | Resrved |
| 20XX/XX/XX | Office | Area×× | A | Moving | XX:XX<br>XX:XX | Road | Route A | 0 Yens | － |
| | | | | | | | | | |

EP 4 148 636 B1

# F I G. 1 0

200:Schedule Adjustment Program

Schedule Change Request Module — 210

Schedule Change Module — 220

# F I G. 1 1

210:Schedule Change Request Module

20:Terminal | 10:Schedule Management Apparatus

Start

S305
Requesting Change

S310
Registering to Adjustment Data

End

# FIG. 12

220:Schedule Change Module

10:Schedule Management Apparatus

Start

↓

Searching for
Adjustment Data — S355

↓

Executing Schedule
Setting Program — S360

↓

End

# FIG. 13

300:Route Guidance Program

310:Route Display Module

Position Monitor Means — 312

Passage Time
Monitor Means — 314

Change Request Means — 316

320:Route Change Module

Route Change Means — 322

# FIG. 14

310:Route Display Module

20:Terminal | 10:Schedule Management Apparatus

Start

Requesting Route Information

S405

On the Route? — NO → S410

YES S415

Obtaining Route Status

Delay Occurred? — YES → S420

NO

S435

Executing Route Change Module

S430

Displaying Route Information

S425 NO

Arrived?

YES

End

# FIG. 15

# FIG. 16

# FIG. 17

320:Route Change Module

10:Schedule Management Apparatus

```
        ┌─────────────┐
        │    Start    │
        └──────┬──────┘
               │
               ▼
   ┌──────────────────────┐  S505
   │   Obtaining Route    │
   │    Information       │
   └──────────┬───────────┘
              │
              ▼
   ┌──────────────────────┐  S510
   │  Searching for Route │
   └──────────┬───────────┘
              │
              ▼          S515
          ╱────────╲        NO
         ╱ Possible ╲──────────────┐
         ╲ to Arrive?╱              │
          ╲────────╱                │
              │ YES                 ▼
              ▼          S520   ┌──────────────────┐  S525
   ┌──────────────────┐         │  Registering to  │
   │  Adjusting Route │         │ Adjustment Data  │
   └──────────┬───────┘         └────────┬─────────┘
              │                          │
              ◄──────────────────────────┘
              ▼
        ┌─────────────┐
        │     End     │
        └─────────────┘
```

F I G . 1 8

F I G . 1 9

# FIG. 20

110:Day-Schedule Suggestion Module

# FIG. 21

100:Schedule Setting Program

| Day-Schedule Suggestion Module | 110 |

| Action Suggestion Module | 120 |

| Coefficient Adjustment Module | 130 |

# FIG. 22

500:Plan Setting Program

20:Terminal | 10:Schedule Management Apparatus

```
                              ┌─────────┐
                              │  Start  │
                              └─────────┘
                                   │
                                   ▼        S610
                              ┌──────────────┐
                              │  Obtaining   │
                              │    Event     │
                              │ Information  │
                              └──────────────┘
              S615                    │
        ┌───────────────┐
        │ Displaying Plan│
        └───────────────┘
                │
                ▼
    NO      ◇ Approved? ◇      YES
                 S620
                                   ▼        S625
                              ┌──────────────┐
                              │  Executing   │
                              │ Day-Schedule │
                              │Suggestion Module│
                              └──────────────┘
                                   │
                                   ▼
                              ┌─────────┐
                              │   End   │
                              └─────────┘
```

# FIG. 23

170:Event Database

| 171:<br>Event Category | 172:<br>Item | 173:<br>Timing | 174:<br>Participants | 175:Conditions | | | 176:Data for Indices | | |
|---|---|---|---|---|---|---|---|---|---|
| | | | | Target Age | Budget | … | Degree of Importance | Frequency | Interest |
| Deadline | Meeting | ○○ | ×× | − | | | a1 | b1 | c1 |
| | | | | | | | | | |
| | | | | | | | | | |
| | | | | | | | | | |
| | | | | | | | | | |
| | | | | | | | | | |

EP 4 148 636 B1

# F I G. 2 4

600:Individual Schedule Database

| Day-Schedule | | | | | Action-Schedule | | | | | |
|---|---|---|---|---|---|---|---|---|---|---|
| Date | Classification | Plan Category | Item | Participants | Category | Time | Location | Place | Budget | Reservation |
| 20XX/XX/XX | Work | Meeting | Area○○ | A, B, C | Moving | XX:XX | XX Line (Subway) | Car 1 | XX Yens | − |
| | | | | | | XX:XX | | | | |
| | | | | | | XX:XX | XX Line (Railway) | Car 1 | XX Yens | Resrved |
| | | | | | | XX:XX | | | | |
| | | | | | | XX:XX | Road | Route A | 0 Yens | − |
| | | | | | | XX:XX | | | | |
| | | | | | Meeting | XX:XX | Meeting Room A | Seat 1 | 0 Yens | Resrved |
| | | | | | | XX:XX | | | | |
| 20XX/XX/XX | Work | Office | Area× × | A | Moving | XX:XX | Road | Route A | 0 Yens | − |
| | | | | | | XX:XX | | | | |
| 20XX/XX/XX | Travel | Lunch | Area○○ | A, B, C | Moving | XX:XX | XX Line (Railway) | Car 3 Seat B | XX Yens | Resrved |
| | | | | | | XX:XX | | | | |
| | | | | | | XX:XX | Road | Route B | XX Yens | − |
| | | | | | | XX:XX | | | | |
| | | | | | Lunch | XX:XX | Restaurant A | Seat 2 | 0 Yens | Resrved |
| | | | | | | XX:XX | | | | |

EP 4 148 636 B1

# FIG.25

310:Route Display Module

20:Terminal | 10:Schedule Management Apparatus

```
        ( Start )
           │
           ↓
    ┌──────────────┐
    │  Requesting  │
    │    Route     │──────────────┐
    │ Information  │              │
    └──────────────┘              ↓
         S705              ┌──────────────┐  S710
                          │  Obtaining   │
                          │ Route Status │
                          └──────────────┘
                                 │
      S720                       ↓
 ┌──────────────┐      NO   ╱ Delay  ╲
 │Displaying Route│◀────────╲Occurred?╱
 └──────────────┘           ╲       ╱
 S725    │                    │ YES    S715
         ↓                    │
     ╱ On the ╲     NO        │      S735
     ╲ Route? ╱──────────────▶│  ┌──────────────┐
     ╲       ╱                │  │  Executing   │
         │ YES                └─▶│ Route Change │
         ↓                       │   Module     │
  S730 ╱ Arrived? ╲  NO          └──────────────┘
  ╲──╲           ╱──┘
      ╲         ╱
         │ YES
         ↓
       ( End )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005044282 A
- JP 2018096810 A
- JP 3952982 B
- WO 2015072409 A1
- US 20140229099 A1
- JP 2020141850 A